# EUROPEAN PATENT APPLICATION

(11) **EP 2 124 284 A1**
(43) Date of publication of application: **25.11.2009**
(21) Application number: 08704308.9
(22) Date of filing: 31.01.2008
(51) Int. Cl.: H01M 8/24, H01M 8/02, H01M 8/10

(54) **FUEL BATTERY, FUEL BATTERY ASSEMBLING METHOD, AND ASSEMBLING DEVICE**

(30) Priority: 16.02.2007 JP 2007036926; 12.11.2007 JP 2007293566
(71) Applicant: Nissan Motor Co., Ltd., Kanagawa 221-0023 (JP)
(72) Inventor: SUICHI, Nobuhiko c/o NISSAN MOTOR CO., LTD, Kanagawa 243-0123 (JP); YAHATA, Kazutaka c/o NISSAN MOTOR CO., LTD, Kanagawa 243-0123. (JP); YAMAGUCHI, Takeshi c/o NISSAN MOTOR CO., LTD, Kanagawa 243-0123 (JP)
(74) Representative: Grünecker, Kinkeldey, Stockmair & Schwanhäusser Anwaltssozietät
(86) International application number: PCT/JP2008/051569
(87) International publication number: WO 2008/099684

(57) **Abstract**

The present invention relates to: a fuel cell which includes a stack part (21) formed by stacking a membrane electrode assembly and a separator, and in which the membrane electrode assembly and the separator each include a communication passage part to form a communication passage for allowing fuel gas or oxidant gas to flow, the communication passage formed by the communication passage parts is opened at a positive end portion and a negative end portion of the stack part (21), and one end of the communication passage is sealable; and a method and an apparatus for assembling the fuel cell. The fuel cell has a problem of not being easy to manufacture, for example. This is because positive and negative polarities of the fuel cell are determined when the stack is assembled; to dispose stacks having the same configuration with their polarities inverted, the stack whose polarities are inverted and the stack whose polarities are not inverted need to be assembled individually. The present invention has been made to solve the problem by forming the positive and negative end portions of the stack part (21) in the same shape, for example.

## Description

### Technical Field

The present invention relates to a fuel cell, and a method and an apparatus for assembling the fuel cell.

### Background Art

Fuel cells being used have a stacked structure of multiple unit cells. To obtain high-voltage output from a fuel cell, multiple fuel cell stacks need to be arrayed and connected.

Japanese Patent Application Publication No. 2005-116226 discloses a fuel cell downsized by: arraying two stacks in parallel with each other so that the polarities of the stacks would be inverted from each other; forming oxidant gas, coolant and fuel gas inlets and outlets in each of a positive side end plate and a negative side end plate; integrally connecting pipes to the inlets and outlets; and thus gathering the pipes on the end plates of the two stacks on one side.

### Disclosure of the Invention

However, the positive and the negative polarities of each stack are determined at the time of manufacturing the stacks. Accordingly, when stacks having the same structure are arrayed with polarities inverted from each other, the oxidant gas, coolant and fuel gas inlets and outlets need to be formed on a positive side end plate of one of the stacks and on a negative side end plate of the other stack. For this reason, the stack whose polarities are inverted and the stack whose polarities are not inverted need to be manufactured individually and then connected to the pipes. Hence, such stacks have a problem of having poor versatility and being difficult to manufacture.

The present invention has been made in view of the above-described problem. An object of the present invention is to provide a compact fuel cell that has excellent versatility and is easy to manufacture, a method for assembling such a compact fuel cell that has excellent versatility and is easy to manufacture, and an apparatus for efficiently assembling such a compact fuel cell that has excellent versatility and is easy to manufacture.

An aspect of the present invention is a fuel cell which includes a stack part formed by stacking a membrane electrode assembly and a separator, in which the membrane electrode assembly and the separator each include a communication passage part to form a communication passage for allowing fuel gas or oxidant gas to flow, the communication passage formed by the communication passage parts is opened at a positive end portion and a negative end portion of the stack part, the positive end portion and the negative end portion of the stack part have the same shape, and one end of the communication passage is sealable.

Another aspect of the present invention is a method for assembling a fuel cell including: a stack part forming step of forming a stack part in which a membrane electrode assembly and a separator are stacked, the membrane electrode assembly and the separator each including a communication passage part to form a communication passage for allowing fuel gas or oxidant gas to flow, the communication passage, formed by the communication passage parts, being opened at a positive end portion and a negative end portion, the positive end portion and the negative end portion having the same shape, one end of the communication passage being sealable; and a sealing step of sealing the one end of the communication passage.

A still another aspect of the present invention is an apparatus for assembling a fuel cell, wherein the fuel cell includes a stack part which is formed by stacking a membrane electrode assembly and a separator, the membrane electrode assembly and the separator each including a communication passage part to form a communication passage for allowing fuel gas or oxidant gas to flow, the communication passage, formed by the communication passage parts, being opened at a positive end portion and a negative end portion, the positive end portion and the negative end portion having the same shape, one end of the communication passage being sealable. The apparatus includes an assembly jig including a recess part in which the stack part is housed. The assembly jig includes a sidewall facing an end surface of the stack part, and the sidewall includes a first cutout part formed to expose the communication passage parts of the stack part.

### Brief Description of the Drawings

[Fig. 1] Fig. 1 is a schematic view of a fuel cell according to Embodiment 1.
[Fig. 2] Fig. 2 is a plan view of a stack shown in Fig. 1.
[Fig. 3] Fig. 3 is a side view of the stack shown in Fig. 1.
[Fig. 4] Fig. 4 is a front view of a stack shown in Fig. 1.
[Fig. 5] Fig. 5 is a perspective view for illustrating inversion of the stack shown in Fig. 1.
[Fig. 6] Fig. 6 is a cross-sectional view of a stacked body shown in Fig. 2.
[Fig. 7] Fig. 7 is a plan view of a membrane electrode assembly shown in Fig. 6.
[Fig. 8] Fig. 8 is a plan view for illustrating inversion of the membrane electrode assembly shown in Fig. 7.
[Fig. 9] Fig. 9 is a plan view of a separator shown in Fig. 6.
[Fig. 10] Fig. 10 is a plan view for illustrating inversion of the separator shown in Fig. 8.
[Fig. 11] Fig. 11 is a perspective view for illustrating a method for manufacturing the separator shown in Fig. 8.
[Fig. 12] Fig. 12 is a plan view of a sealer shown in Fig. 1.
[Fig. 13] Fig. 13 is a cross-sectional view of the sealer shown in Fig. 1.
[Fig. 14] Fig. 14 is a perspective view of an apparatus for assembling the fuel cell according to Embodiment 1.
[Fig. 15] Fig. 15 is a front view of the apparatus for assembling the fuel cell, shown in Fig. 14.
[Fig. 16] Fig. 16 is a cross-sectional view of the apparatus for assembling the fuel cell, shown in Fig. 14.
[Fig. 17] Fig. 17 is a schematic view of Alternative Example 1 according to Embodiment 1.
[Fig. 18] Fig. 18 is a front view of Alternative Example 2 according to Embodiment 1.
[Fig. 19] Fig. 19 is a cross-sectional view of Alternative Example 2 according to Embodiment 1.
[Fig. 20] Fig. 20 is a cross-sectional view of Alternative Example 3 according to Embodiment 1.
[Fig. 21] Fig. 21 is a plan view of a stack of a fuel cell according to Embodiment 2.
[Fig. 22] Fig. 22 is a side view of the stack of the fuel cell according to Embodiment 2.
[Fig. 23] Fig. 23 is a front view of the stack of the fuel cell according to Embodiment 2.
[Fig. 24] Fig. 24 is a schematic view of a fuel cell according to Embodiment 3.
[Fig. 25] Fig. 25 is a perspective view of a conductor shown in Fig. 24.
[Fig. 26] Fig. 26 is a front view of a grommet shown in Fig. 24.
[Fig. 27] Fig. 27 is a front view for illustrating arrangement of the conductor and grommets.
[Fig. 28] Fig. 28 is a plan view of an apparatus for assembling the fuel cell according to Embodiment 3.
[Fig. 29] Fig. 29 is a front view of the assembly jigs shown in Fig. 28.
[Fig. 30] Fig. 30 is a cross-sectional view for illustrating a serially disposing step in the method for assembling the fuel cell according to Embodiment 3, and shows serial arrangement of assembly jigs in a stack case.
[Fig. 31] Fig. 31 is subsequent to Fig. 30, and is a plan view for illustrating pressing performed on stack parts housed respectively in recess parts of the serially arranged assembly jigs.
[Fig. 32] Fig. 32 is a schematic view of Alternative Example of a fuel cell according to Embodiment 3.

### Best Modes for Carrying out the Invention

Embodiments of the present invention will be described below with respect to the drawings. In the following description, right-handed three-dimensional coordinate system having: a Z-axis parallel with a stacking direction of multiple unit cells forming each stack of a fuel cell; an X-axis parallel with the long side of each unit cell; and a Y-axis perpendicular to the X-axis and the Z-axis. Here, geometrical arrangement (such as the direction of upside/downside or inclination) of the entire fuel cell is not limited to that to be described below.

### <Embodiment 1>

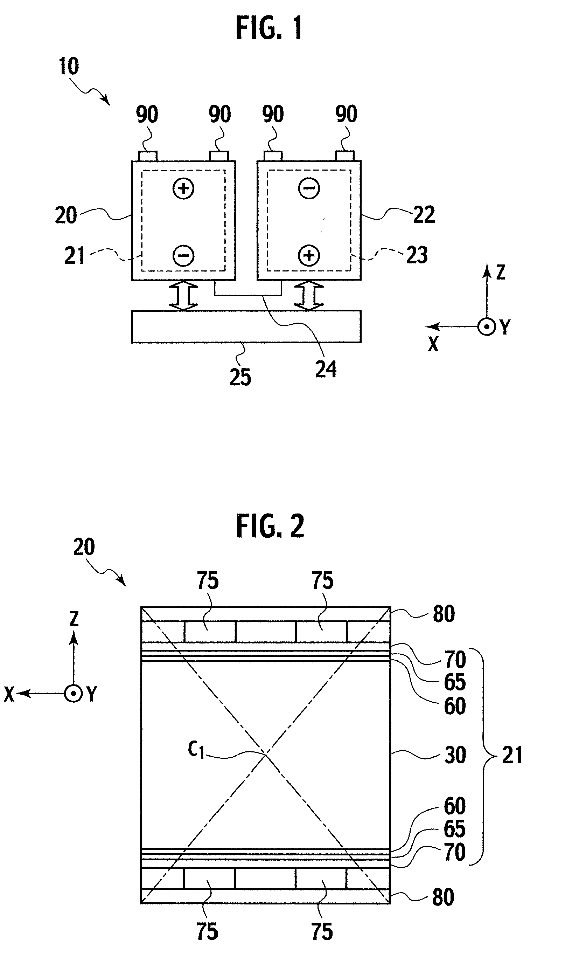

As shown in Fig. 1, a fuel cell 10 includes: a stack 20 and a stack 22 arranged in parallel with each other in an X-direction and electrically connected to each other in series; sealers 90 for sealing an end of each of communication passages of the stacks 20 and 22; a bus bar 24 serving as an interconnection electrically connecting the stacks 20 and 22 in series; and a piping installation 25 such as pipes for respectively allowing oxidant gas, coolant and fuel gas to flow into and flow out of communication passage parts of the stacks 20 and 22. The fuel cell 10 is used, for example, as a stationary power supply, a power supply for a mobile household appliance such as a mobile phone, an emergency power supply, an outdoor power supply for leisure or construction, or a mobile-unit power supply for an automobile or the like having a limited mounting space. In particular, the fuel cell 10 is preferable to be used as a mobile-unit power supply required to supply a high output voltage after a relatively long operation stop.
As shown in Fig. 2 to Fig. 4, the stack 20 includes a stack part 21, thermal expansion absorbers 75, pressure plates 80 and a tightening mechanism 85. Similarly, the stack 22 includes a stack part 23, the thermal expansion absorbers 75, the pressure plates 80 and the tightening mechanism 85.

As shown in Fig. 2, a cross section, perpendicular to a Y-axis, of the stack part 21 has a point-symmetrical shape with a center C₁ as the center of symmetry, the center C₁ corresponding to the X-direction center and the Z-direction (stacking direction) center of the stack part 21. Accordingly, both Z-direction end portions (positive and negative end portions) of the stack part 21 have the same shape.

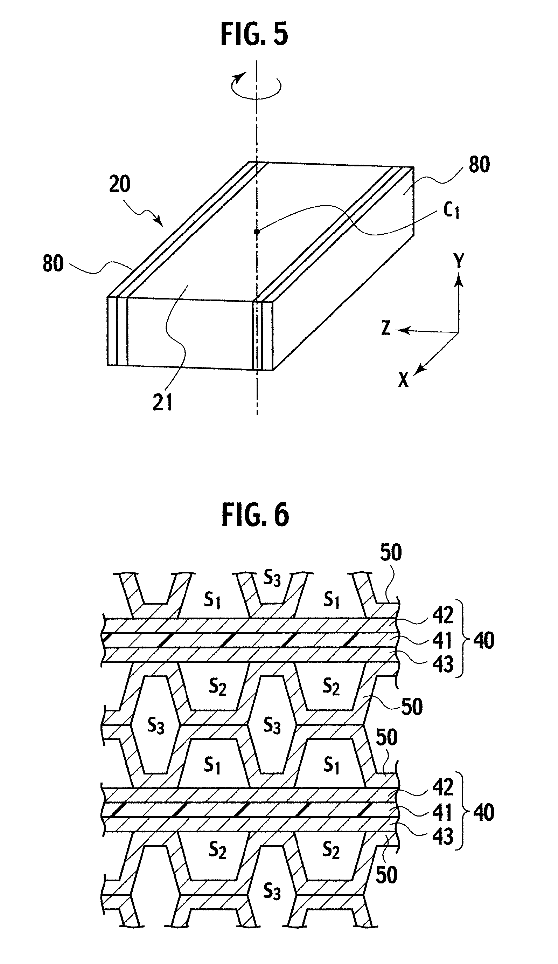

As shown in Fig. 5, the stack part 23 is a stack part that is identical to the stack part 21 while being rotated 180° (this operation will be referred to as inversion below) about an axis passing the center C₁ and being parallel with the Y-axis. Accordingly, both Z-direction end portions (positive and negative end portions) of the stack part 23 also have the same shape.

Since the stack 20 and the stack 22 have the same shape, the stack 20 will be described as the representative of the stacks below.

The stack part 21 of the stack 20 includes: a stacked body 30; a pair of current collecting plates 60 disposed on the outer sides of both Z-direction ends of the stacked body 30, respectively; a pair of insulating plates 65 disposed on the Z-direction outer sides of the pair of current collecting plates 60, respectively; and a pair of end plates 70 disposed on the Z-direction outer sides of the pair of insulating plates 65, respectively.

The stacked body 30 is formed of multiple unit cells that are stacked and are each formed of a membrane electrode assembly (MEA) 40 held between a pair of separators 50 as shown in Fig. 6. Each membrane electrode assembly 40 includes an electrolyte membrane 41, a cathode electrode (air electrode) 42 and an anode electrode (fuel electrode) 43 disposed so as to sandwich the polymer electrolyte membrane 41.

The electrolyte membrane 41 is a proton-conductive ion exchange membrane made of a polymer electrolyte material such as fluororesin, and has excellent electrical conductivity in a wet condition.

The cathode electrode 42 includes a cathode catalyst layer and a gas diffusion layer, while the anode electrode 43 includes an anode catalyst layer and a gas diffusion layer.

The cathode catalyst layer and the anode catalyst layer include: electrode catalyst made of catalyst components carried by conductive carriers; and polymer electrolyte. The conductive carriers of the electrolyte catalyst are not limited to any particular kind as long as having a specific surface area for carrying the catalyst components in a desired dispersion state and sufficient electronic conductivity as current collectors, but are preferably those containing carbon particles as a main component.

The catalyst components used for the cathode catalyst layer are not limited to any particular kind as long as having catalysis for reduction reaction of oxygen. The catalyst components used for the anode catalyst layer are not limited to any particular kind as long as having catalysis for oxidation reaction of hydrogen.

The catalyst components are chosen from metals and alloys of platinum, ruthenium, iridium, rhodium, palladium, osmium, tungsten, lead, iron, chromium, cobalt, nickel, manganese, vanadium, molybdenum, gallium and aluminum, for example. To increase catalytic activity, protection against toxity and thermal resistance, the catalyst components are preferably those containing at least platinum. The catalyst components used for the cathode catalyst layer and the anode catalyst layer do not need to be the same, and may be chosen appropriately.

The polymer electrolyte of the electrode catalyst is not limited to any particular kind as long as using a material having at least high proton conductivity. Fluorine electrolyte containing fluorine atoms in the entire or part of the polymer skeleton, or hydrocarbon electrolyte containing no fluorine atom in the polymer skeleton, may be used, for example.

The gas diffusion layers are made of a material having sufficient gas diffusion properties and conductivity, such as carbon cloth woven from threads made of carbon fibers, carbon paper or carbon felt.

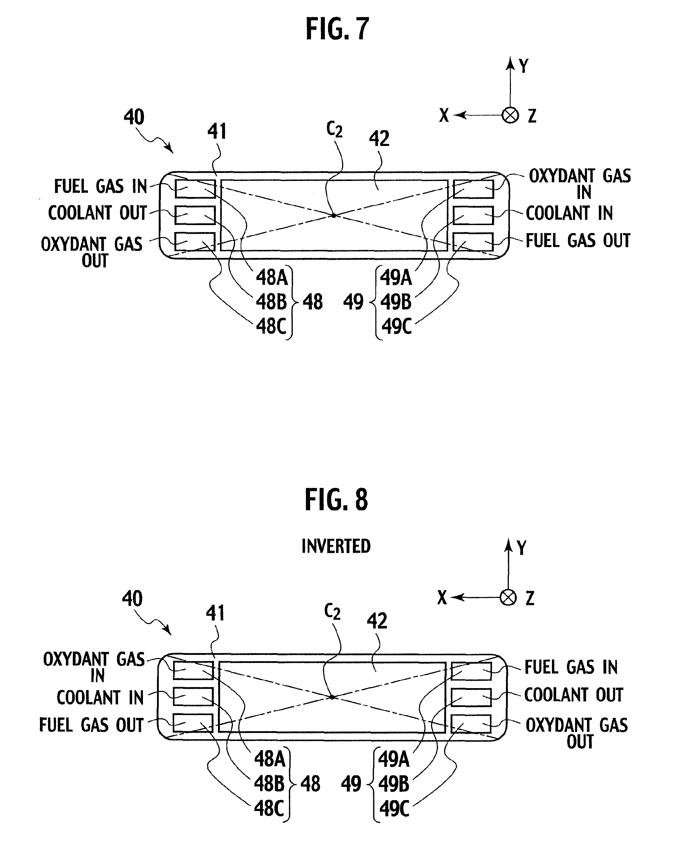

As shown in Figs. 7 and 8, the membrane electrode assemblies 40 each include: a power generation region in which the cathode electrode 42 and the anode electrode 43 are disposed; and communication passage parts 48 and 49 disposed on the X-direction outer sides of the power generation region, respectively. The membrane electrode assembly 40 has a point-symmetrical shape, in the plane of the power generation region (plane included in the power generation region and being perpendicular to the Z-axis), with a center C₂ as the center of symmetry, the center C₂ corresponding to the X-direction center and the Y-direction center of the membrane electrode assembly 40.

The communication passage parts 48 and 49 respectively include three openings 48A to 48C and three openings 49A to 49C having the same shape. The openings 48A and 49C are for fuel gas (hydrogen, for example) inlet and outlet, respectively. The openings 48B and 49B are for coolant (cooling water, for example) outlet and inlet, respectively. The openings 48C and 49A are for oxidant gas (oxygen, for example) outlet and inlet, respectively.

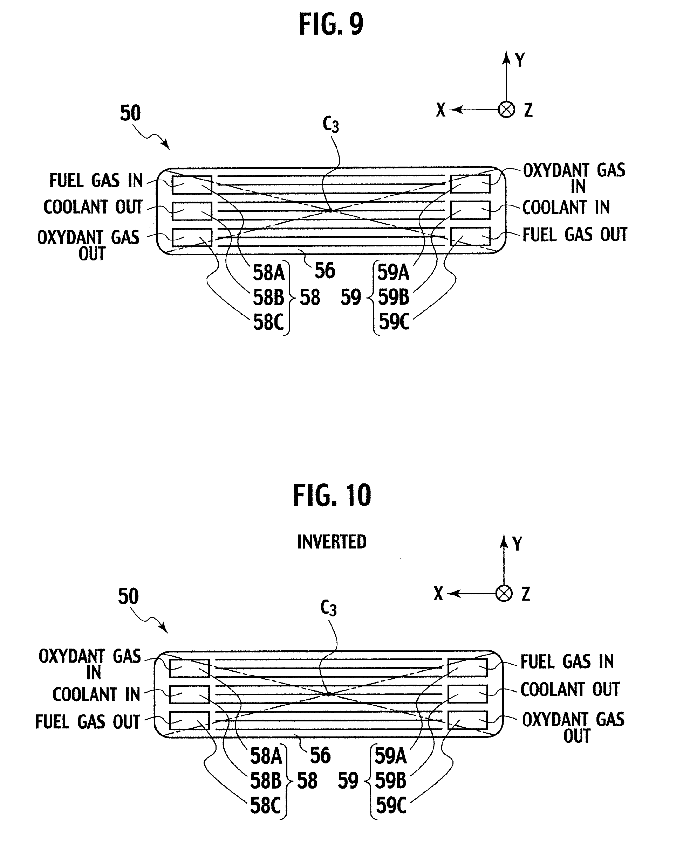

As shown in Figs. 9 and 10, the separators 50 each include: a passage part 56 disposed so as to face the power generation region of the corresponding membrane electrode assembly 40; and communication passage parts 58 and 59 disposed on the X-direction outer sides of the passage part 56, respectively. The separator 50 has a point-symmetrical shape, in the plane of the passage part 56 (plane included in the passage part 56 and being perpendicular to the Z-axis), with a center C₃ as the center of symmetry, the center C₃ corresponding to the X-direction center and the Y-direction center of the separator 50. In each unit cell and the stacked body 30 formed by stacking unit cells, the center C₂ of each of the membrane electrode assemblies 40 and the center C₃ of each of the separators 50 are located on the same straight line parallel to the Z-axis.

In the passage part 56, concavo-convex shape grooves for allowing fuel gas, oxidant gas and coolant to flow are formed so as to extend in the X-direction.

The communication passage parts 58 and 59 are disposed so as to face the communication passage parts 48 and 49 of the corresponding membrane electrode assembly 40, respectively, and respectively include three openings 58A to 58C and three openings 59A to 59C having the same shape and aligned respectively with the openings 48A to 48C and 49A to 49C of the communication passage parts 48 and 49. The openings 58A and 59C are for fuel gas inlet and outlet, respectively. The openings 58B and 59B are for coolant outlet and inlet, respectively. The openings 58C and 59A are for oxidant gas outlet and inlet, respectively.

As shown in Fig. 6, one of the separators 50 (a cathode separator) is disposed so as to be in contact with the cathode electrode 42. Spaces S1 defined by the surface of the concavo-convex shape grooves (see Fig. 9) of the passage part 56 and the surface of the cathode electrode 42 form passages for allowing oxidant gas to flow. The other one of the separators 50 (an anode separator) is disposed so as to be in contact with the anode electrode 43. Spaces S2 defined by the surface of the concavo-convex shape grooves of the passage part 56 and the surface of the anode electrode 43 form passages for allowing fuel gas to flow. Spaces S3 defined by the concavo-convex shape grooves of the passage parts 56 of the separators 50, facing each other, of each two adjacent unit cells form passages for allowing coolant to flow.

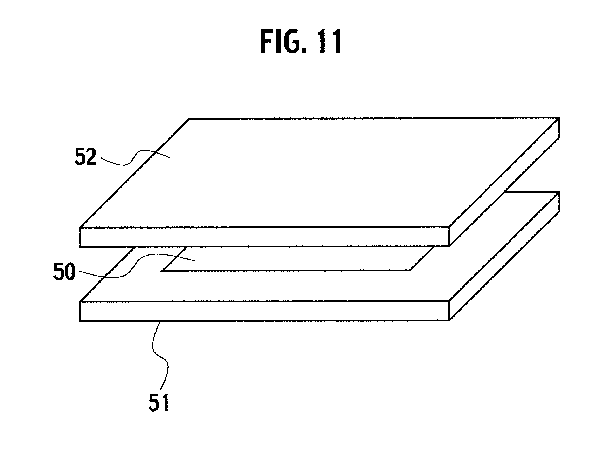

As shown in Fig. 11, the separators 50 are formed by subjecting stainless steel plates to press working. Although the polarities of the stack parts 21 and 23 of the stacks 20 and 22 are inverted from each other, the structures of the separators are the same as described above. Accordingly, press-molding dies 52 and 53 for molding the separators 50 can be a single kind, enabling cost reduction in fabrication of the separators 50. A stainless steel plate, which is easy to apply machining and has excellent conductivity, is preferable to be used as a material of the separators 50. A stainless steel plate also allows application of corrosion-resistant coating when necessary. An aluminum plate or clad metal may also be used as a material of the separators 50.

Since the flowabilities of fuel gas and oxidant gas are different, using two kinds of separators 50 is also preferable. For example, it is preferable to set the width of each of the concavo-convex shape grooves of the passage part 56 of the one of the separators 50 (cathode separator) to be larger than that of each of the concavo-convex grooves of the passage part 56 of the other one of the separators 50 (anode separator). In this case, two kinds of press-molding dies are required corresponding to the shapes of the concavo-convex grooves of the passage parts 56.

The membrane electrode assemblies 40 and the separators 50 of the stack 22 (stack part 23) have the same shapes as those of the membrane electrode assemblies 40 and the separators 50 of the stack 20 (stack part 21), although being inverted. By inverting the stack part, the openings 48A and 58A are used for oxidant gas inlet, instead of fuel gas inlet; the openings 48B and 58B are used for coolant inlet, instead of coolant outlet; the openings 48C and 58C are used for fuel gas outlet, instead of oxidant gas outlet; the openings 49A and 59A are used for fuel gas inlet, instead of oxidant gas inlet; the openings 49B and 59B are used for coolant outlet, instead of coolant inlet; the openings 49C and 59C are used for oxidant gas outlet, instead of fuel gas outlet, as shown in Fig. 8 and Fig. 10.

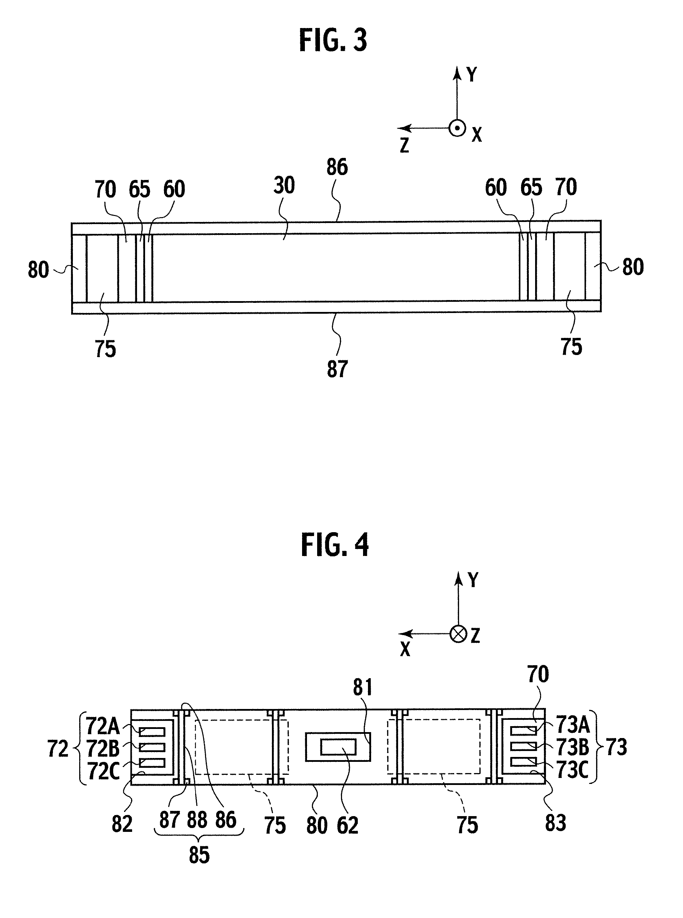

The current collecting plates 60 are made of a gas impermeable conductive member such as high-density carbon or copper plate. As shown in Figs. 3 and 4, the current collecting plates 60 each include: an output terminal 62 that outputs electromotive force generated at the stack part 21 and that has a shape protruding outwardly from a central region of the current collecting plate in the Z-direction; and communication passage parts formed at X-direction end portions of the current collecting plate 60, respectively. The communication passage parts include multiple openings aligned so as to communicate respectively with the openings 58A to 58C and 59A to 59C of the communication passage parts 58 and 59 of the adjacent separator 50.

The insulating plates 65 are made of an insulating material such as rubber or resin, and each include: a central through-hole formed in a central region of the insulating plate 65; and communication passage parts formed at X-direction end portions of the insulating plate 65, respectively. The central through-hole is formed in such a position that the output terminal 62 of the adjacent current collecting plate 60 would pass and project through the through-hole. The communication passage parts have the approximately same shape as that of the communication passage parts of the current collecting plate 60, and are aligned respectively with the communication passage parts of the adjacent current collecting plate 60. The communication passage parts, similarly to the communication passage parts of the current collecting plate 60, include multiple openings aligned so as to communicate respectively with the openings 58A to 58C and 59A to 59C of the communication passage parts 58 and 59 of the adjacent separator 50.

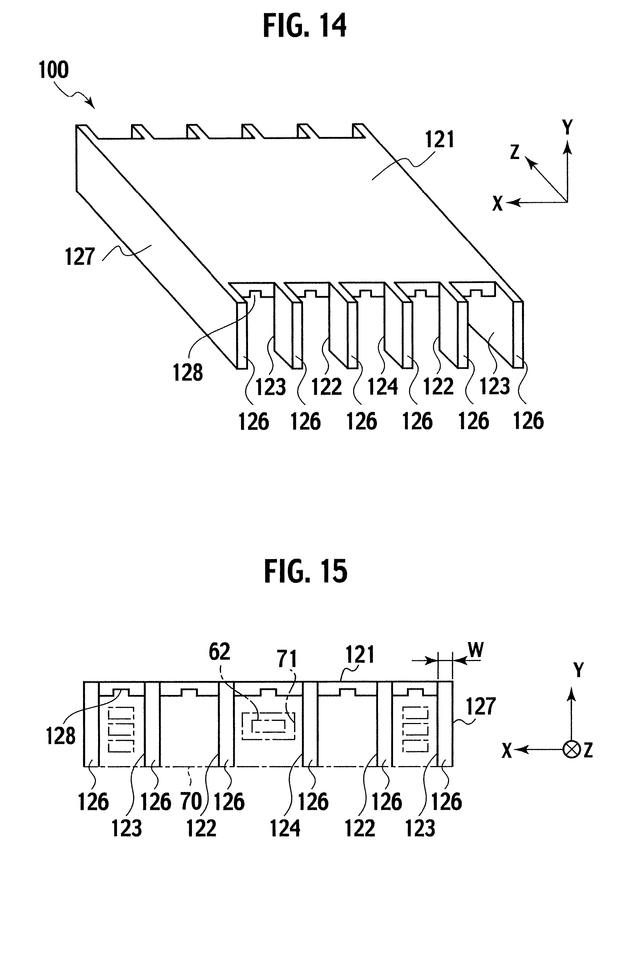

The end plates 70 are made of a material having rigidity such as a metal material, for example, steel, and each include: a central through-hole 71 (see Fig. 15) formed in a central region of the end plate 70; and communication passage parts 72 and 73 symmetrically disposed at X-direction end portions of the end plate 70. The central through-hole is aligned with the central through-hole of the adjacent insulating plate 65, and formed so that the output terminal 62 of the adjacent current collecting plate 60 would pass through the through-hole 71 and project therethrough. The communication passage parts 72 and 73 have the approximately same shape as that of the communication passage parts of the current collecting plate 60, and are aligned respectively with the communication passage parts of the adjacent insulating plate 65 and the adjacent current collecting parts. The communication passage parts 72 and 73, similarly to the communication passage parts of the current collecting plate 60 and the insulating plate 65, include openings 72A to 72C and 73A to 73C aligned so as to communicate respectively with the openings 58A to 58C and 59A to 59C of the communication passage parts 58 and 59 of the separator 50.

The openings 72A to 72C and 73A to 73C of the communication passage parts 72 and 73 of the end plate 70 communicate respectively with the openings of the communication passage parts of the stacked body 30, i.e., the openings 58A to 58C and 59A to 59C of the communication passage parts 58 and 59 of the separators 50 and the openings 48A to 48C and 49A to 49C of the communication passage parts 48 and 49 of the membrane electrode assemblies 40, through the openings of the communication passage parts of the current collecting plates 60 and the insulating plates 65, and form communication passages that allow fuel gas, coolant and oxidant gas to flow and that communicate with collecting manifolds to be described later, together with the openings. The communication passages are opened at the end plates 70 disposed on the Z-direction end portions (positive and negative end portions) of the stack part 21. One of the opened ends of each of the communication passages is sealed by the sealer 90 to be described later, and a piping installation 25 is connected to the other end thereof.

Two thermal expansion absorbers 75 are disposed on Z-direction outer side surfaces of the end plates 70 so as to be symmetric with respect to the X-direction center of the end plates 70. The two thermal expansion absorbers 75 are formed respectively in a position between the central through-hole and the communication passage part 72 of the end plate 70 and a position between the central through-hole and the communication passage part 73. The thermal expansion absorbers 75 each include an elastic member that can be elastically deformed by expansion and contraction of the stacked body 30 in the stacked-direction. The elastic member is an elastic rubber or a spring such as a plate spring or a coil spring, for example.

For example, when the temperature of the fuel cell 10 changes depending on the use environment, the stacked body 30 expands or contracts in the Z-direction (stacked direction) due to thermal expansion or thermal contraction of the separators 50. However, since the thermal expansion absorbers 75 absorb expansion and contraction of the stacked body 30 in the stacked-direction, the clamp load (contact pressure pressing the membrane electrode assemblies 40 between the separators 50) of the stacked body 30 is maintained, thereby preventing variation in properties among unit cells and deterioration of the fuel cell such as poor sealing properties.

The pressure plates 80 are disposed on Z-direction outer sides of the thermal expansion absorbers 75, respectively, and are made of a material having rigidity such as a metallic material, for example, steel. The pressure plates 80 each include a central through-hole 81 formed in a central region of the pressure plate 80; and open parts 82 and 83 symmetrically disposed at X-direction end portions of the pressure plate 80.

The central through-hole 81 is aligned with the central through-hole of the adjacent end plate 70, and is formed so that the output terminal 62 of the current collecting plate 60 would pass through the through-hole 81 and project. The open parts 82 and 83 are formed by cutting the X-direction end portions of the pressure plate 80, and are aligned with the communication passage parts 72 and 73 of the adjacent end plate 70, respectively. In the open parts 82 and 83, the communication passage parts 72 and 73 of the end plate 70 are exposed while being opened. Here, the open parts 82 and 83 are not limited to cutouts, and may be holes, for example.

The tightening mechanism 85 is provided to retain the reaction force of load pressing the stacked body 30 in the Z-direction (stacked direction). The tightening mechanism 85 includes: four strip-like tension plates 86 extending in the Z-direction along one Y-direction side (upper side in the drawings) side-surface of the stack part 21; four strip-like tension plates 87 extending in the Z-direction along the other Y-direction side (lower side in the drawings) side-surface of the stack part 21; and eight connecting members 88 extending in the Y-direction on the pressure plate 80 and connecting, at the Y-direction end portions, Z-direction end portions of the tension plates 86 and 87. By pressing the pressure plate 80 against the stacked body 30 in the Z-direction, the tightening mechanism 85 can tighten the stacked body 30 in a pressurized state (in a state where unit cells are pressed against each other). The tightening mechanism 85 is omitted in Fig. 2.

The tightening mechanism 85 is not limited to the configuration using the tension plates 86 and 87 and the connecting members 88, and may employ bolt tightening. For example, the stacked body 30 can be tightened in a state of being pressed in the Z-direction by forming through-holes each extending in the Z-direction respectively at four corners of the stack part 21 (four corners of the stack part 21 when the stack part 21 is projected on an X-Y plane), inserting tie rods respectively into the through-holes, and then engaging nuts with the male screw parts of the tie rods.

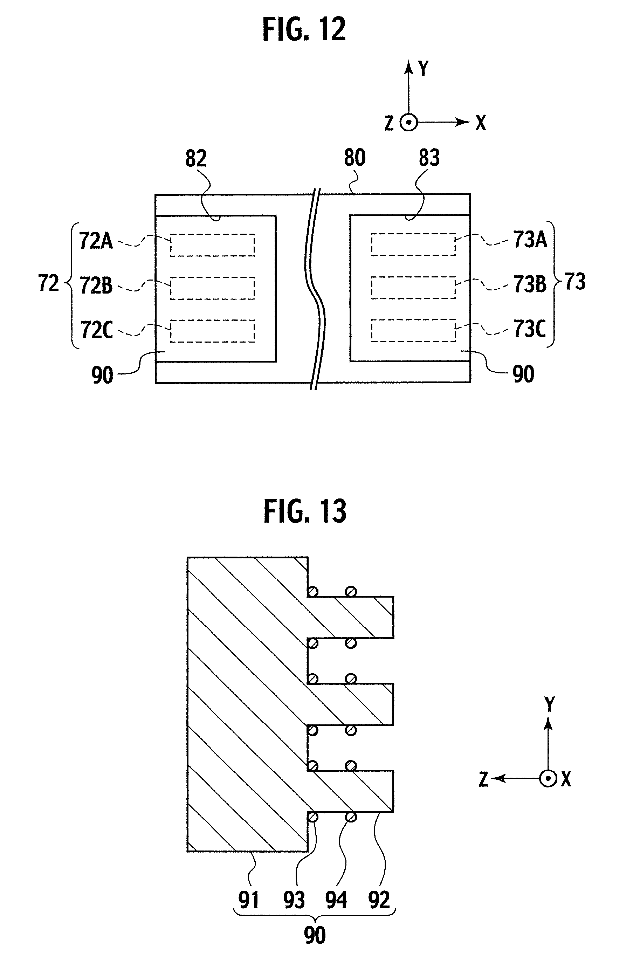

As shown in Figs. 12 and 13, the sealers 90 each have a simple configuration and includes: a main body part 91; three projection parts 92 projecting from one end surface of the main body part 91; first sealing members 93 each being an O-ring disposed so as to surround a base of the corresponding projection part 92 (a boundary between the main body part 91 and the projection part 92); second sealing members 94 each being an O-ring disposed so as to surround an intermediate portion of the corresponding projection part 92.

The main body parts 91 are formed in such a size that the main bodies 91 can be inserted respectively into the open parts 82 and 83 of the pressure plate 80. The projection parts 92 have such a shape and disposition that: when the main body 91 is disposed in the open part 82 of the pressure plate 80, the projection parts 92 of the main body 91 can be inserted respectively into the openings 72A to 72C of the corresponding end plate 70 at the same time, while, when the main body 91 is disposed in the open part 83 of the pressure plate 80, the projection parts 92 of the main body 91 can be inserted respectively into the openings 73A to 73C of the corresponding end plate 70 at the same time; and the openings can be sealed by the first and second sealing members 93 and 94 being in contact respectively with the inner circumferential surfaces of the openings with appropriate pressure. Although the first and second sealing members 93 and 94 are O-rings, the O-rings are not limited to any particular configurations as long as providing excellent sealing performance.

The sealers 90 are used to selectively seal the openings 72A to 72C and 73A to 73C of the communication passage parts 72 and 73 of the end plates 70, through the open parts 82 and 83 of the pressure plate 80.

The openings 72A to 72C and 73A to 73C of the end plates 70 communicate respectively with the openings 58A to 58C and 59A to 59C of the communication passage parts 58 and 59 of each of the separators 50 through the communication passage parts of the current collecting plate 60 and the insulating plates 65. Accordingly, by disposing the sealers 90, shown in Fig. 13, respectively in the open parts 82 and 83 of the pressure plate 80 and thereby sealing the openings 72A to 72C and 73A to 73C of the end plates 70, one ends of the communication passages communicating with the openings 58A to 58C and 59A to 59C of the communication passage parts 58 and 59 shown in Figs. 9 and 10 can be closed.

The stack part 21 as a whole has the point-symmetrical shape with the center C₁ as the center of symmetry as shown in Fig. 2, and has, in end portions, openings 72A to 72C and 73A to 73C of the communication passage parts 72 and 73 of the end plates 70, as end openings of the communication passages communicating with the communication passage parts 58 and 59 of the separators 50. Accordingly, by inverting the stack parts 21 from each other and thereby selectively sealing one ends of the communication passages by the sealers 90, the stack parts can have different polarities. In other words, stack parts having the same configuration can be used in common as stack parts having different polarities. The stack parts have excellent versatility, are easy to manufacture and compact, and are also capable of avoiding problems of limiting layout positions to some particular ones and of mistakenly stacking the stack parts.

Next, an apparatus for assembling the fuel cell according to Embodiment 1 will be described with reference to Figs. 14 to 16.

The assembling apparatus includes an assembly jig 100. The assembly jig 100 includes: a bottom wall 121 on one Y-direction side (upper side in the drawings) of the assembly jig 100; sidewalls 120 extending respectively from both Z-direction edges of the bottom wall 121 toward the other Y-direction side (lower side in the drawings) of the bottom wall 121; and sidewalls 127 extending respectively from both X-direction edges of the bottom wall 121 to the other Y-direction side (lower side in the drawings). The bottom wall 121, the sidewalls 120 and the sidewalls 127 together define a recess part 110.

The recess part 110 is used to house the stack part 21 pressed in the Z-direction (stacking direction), in the inside thereof, more specifically, between the sidewalls 120, and is used to attach the thermal expansion absorbers 75, the sealers 90 and the like to the housed stack part 21 while positioning them on the end plates 70, and to attach the tightening mechanism 85 to the housed stack part 21.

The sidewalls 120 are in contact with the end plates 70 of the stack part 21 housed in the recess part 110. As shown in Fig. 14, cutout parts 122 to 124, each closed at one Y-direction end and opened at the other end, and projection parts 126 to be described later are provided to the sidewalls 120.

The cutout parts (second cutout parts) 122 are provided to dispose the thermal expansion absorbers 75 on the end plates 70 of the stack part housed in the recess part 110, and are disposed and formed in a shape so as to be able to reliably prevent the thermal expansion absorbers 75 and the sidewalls from interfering with each other.

The cutout parts (first cutout parts) 123 are provided to attach the sealers 90 to the communication passage parts 72 and 73 of the end plates 70 of the stack part housed in the recess part 110, and are formed so as to align respectively with the communication passage parts 72 and 73. The cutout parts 123 are disposed and formed in a shape so as to be able to reliably prevent the sealers 90 and the sidewalls 120 from interfering with each other.

The cutout parts (third cutout parts) 124 are formed so as to align with the central through-holes 71 of the end plates 70 and to expose the output terminals 62 of the current collecting plates 60 of the stack part housed in the recess part 110. The cutout parts 124 are disposed and formed in a shape so as to be able to reliably prevent the output terminals 62 and the sidewalls 120 from interfering with each other.

As described above, the cutout parts 122 to 124 are cutouts each of which is opened on the other Y-direction side. Accordingly, even after the thermal expansion absorbers 75 and the sealers 90 are attached to the both end portions of the stack part 21 in the recess part 110 and the tightening mechanism 85 is attached to the stack part 21, the assembly jig 100 can be detached from the stack part 21 by being pulled out toward the one Y-direction side.

The projection parts 126 are formed on the sidewalls 120 near the cutout parts 122 and 123 so as to each project outward in the Z-direction. The projection parts 126 are used to position the thermal expansion absorbers 75 and the sealers 90 in the X-direction and the Y-direction when the thermal expansion absorbers 75 and the sealers 90 are to be attached to the stack part 21 in the recess part 110. A dimension (Z-direction height) of the projection parts 126 are set so that a Z-direction space would be provided between a Z-direction outer side surface of each of the projection part 126 and the corresponding pressure plate 80 when the pressure plates 80 are disposed on the Z-direction outer sides of the thermal expansion absorbers 75. Thereby, interference between the pressure plates 80 and the sidewalls 120 can reliably be prevented.

In the bottom surface of the recess part 110 (the other Y-direction side surface of the bottom wall 121), multiple groove parts 128 each extending in the Z-direction are formed. The groove parts 128 each have a width and a depth capable of receiving the corresponding tension plate 86. Since both Z-direction ends of the groove parts 128 are opened on the closed end sides of the cutout parts 122 to 124, the tension plates 86 can be inserted from the end openings of the groove parts 128 even when the stack part 21 is in the state of being inserted in the recess part 110. Thus, the stack part 21 can be tightened by the tightening mechanism 85 while being in the recess part 110.
It is preferable that a thickness D of the bottom surface of the recess part 110 (the bottom wall 121 of the assembly jig 100) and an X-direction width (presser width) W of each of the projection parts 126 of the sidewalls 120 are appropriately set depending on the material of the assembly jig 100 and the stack pressure (stacking-direction pressing force applied to the stacked unit cells). For example, when the recess part 110 is made of aluminum, the thickness D and the width W are each set at 20 mm or larger.

By using the assembly jig 100, the thermal expansion absorbers 75 and the sealers 90 can be positioned efficiently using the cutout parts 122 and 123 formed in the sidewalls 120, at the time of attaching the thermal expansion absorbers 75 and the sealers 90 to the end plate 70 of the stack part 21 housed in the recess part 110. Moreover, even when the sealers 90 are attached to the communication passage parts 72 and 73 of the end plate 70 to seal the one sides of the communication passages of the stack part 21, the sealers 90 are prevented from interfering with the sidewalls 120. Thus, the assembly can be performed with the stack part 21 being housed in the recess part 110.

Here, the sealers 90 may be attached to the stack part 21 after the assembly jig is removed from the stack part 21.

Next, a method for assembling the fuel cell according to Embodiment 1 will be described.

The assembly method includes: a stack part forming step of forming the stack parts 21 and 23; a sealing step of sealing the communication passage parts 72 and 73 of one of the end plates 70 by the sealers 90 in order to selectively seal one ends of the communication passages of each of the stack parts; and an inversely disposing step of alternately inverting the two stack parts 21 and 23 and then arranging the stack parts in parallel. Since the stack 20 and the stack 22 have the same shape, the method for assembling the stack 20 will be described below as the representative of the stacks.

As described above with reference to Fig. 6, in the stack part forming step, the membrane electrode assembly 40 and the separator 50 are alternately stacked and unit cells are sequentially formed to obtain the stacked body 30 in the recess part 110 of the assembly jig 100. As described with reference to Fig. 7 to Fig. 10, each of the membrane electrode assembly 40 and each of the separators 50 have the point-symmetrical shapes with the center C₂ as the center of symmetry and the center C₃ as the center of symmetry, respectively. Accordingly, as described above, the stacked body 30 has the point-symmetrical shape with the center C₁ as the center of symmetry.

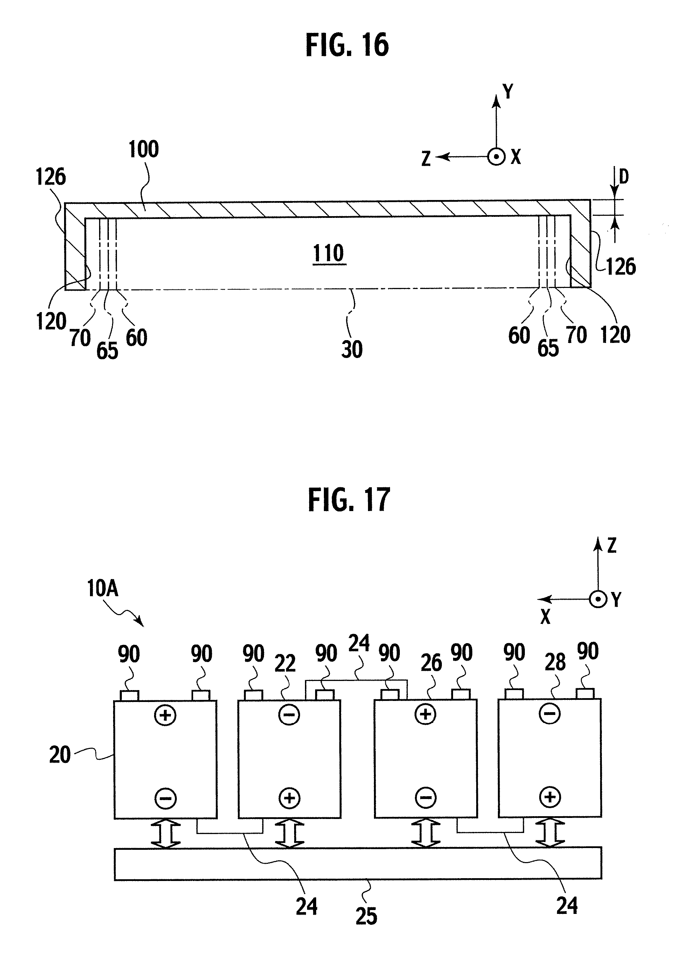

The current collecting plates 60, the insulating plates 65 and the end plates 70 are sequentially and symmetrically disposed on the both Z-direction end outer sides of the thus obtained stacked body 30, as shown in Fig. 2. Thereby, the stack part 21 is formed. At this time, the stack part 21 is housed in the recess part 110 of the assembly jig 100 shown in Fig. 14 and Fig. 16 while being pressed in the Z-direction (stacking direction).

The thermal expansion absorbers 75 are disposed on the end plates 70 through the cutout parts 122 formed in the sidewalls 120 of the main body of the assembly jig 100. In this event, the thermal expansion absorbers 75 are positioned in the X-direction and the Y-direction by the projection parts 126. Then, the pressure plates 80 are disposed on the Z-direction outer sides of the thermal expansion absorbers 75. Here, a Z-direction space is provided between each of the projection parts 126 and the corresponding pressure plate 80, thus preventing interference therebetween.

The tension plates 86 and 87 of the tightening mechanism 85 are attached to the stack part 21. Of these, the tension plates 86 are inserted from the end openings of the groove parts 128 formed in the bottom surface of the recess part 110. Thereafter, the connecting members 88 are disposed on the pressure plates 80 and are then connected to the end portions of the tension plates 86 and 87. The tightening mechanism 85 is thus attached to the stack part 21, and the force pressing the unit cells of the stack part 21 in the Z-direction (stacking direction) is retained.

In the fuel cell thus assembled, even when the Z-direction length of the stacked body 30 changes, the change of the length of the stacked body 30 can be absorbed and the tightening load of the stacked body 30 can be maintained by elastic deformation of the elastic members of the thermal extension absorbers 75 each sandwiched between the stacked body 30 and the corresponding pressure plate 80. This prevents variation in properties among the unit cells and deterioration of the fuel cell such as poor sealing properties.

In the sealing step, the communication passage parts 72 and 73 of one of the end plates 70 are sealed by sealers 90 in order to selectively seal the one ends of the communication passages of the stack part. In this event, the sealers 90 are moved to the communication passage parts 72 and 73 of the end plate 70 through the cutout parts 123 and the open parts 82 and 83 of the pressure plates 80, and are positioned in the X-direction and the Y-direction by the projection parts 126 adjacent to the cutout parts 123. When the projection parts 92 of the sealers 90 are inserted into the openings of the communication passage parts 72 and 73 of the end plate 70, the first and second sealing members 93 and 94 come into contact with the inner circumferential surfaces of the openings to seal the openings.

Thereafter, the assembly jig 100 is pulled out toward the one Y-direction side, and is thereby removed from the stack part 21. Thus, the stack 20 including the stack part 21 having the point-symmetrical shape with the center C₁ as the center of symmetry is obtained. Here, the end portions of the communication passage to be closed with the sealers 90 are different between the stack part 21 and the stack part 23. For example, when the positive side communication passages of the stack part 21 are sealed, the negative side communication passages of the stack part 23 are sealed, while, when the negative side communication passages of the stack part 21 are sealed, the positive side communication passages of the stack part 23 are sealed.

As described above, in the sealing step, interference between the main body of the assembly jig 100 and the sidewalls 120 is prevented. Accordingly, the projection parts of the sealers 90 can be inserted into the openings of the communication passages of the stack part 21 which is housed in the recess part 110. Hence, excellent workability is provided. In addition, by using the projection parts 126 adjacent to the cutout parts 123, the sealers 90 can be positioned easily.

In the inversely disposing step, the stack parts 21 and 23 are alternately inverted. Thereby, the two stacks 20 and 22 having inverted polarities from each other and having the communication passage parts 72 and 73 sealed by the sealers 90 on the same side can be obtained. By electrically connecting the stacks 20 and 22 in series, the fuel cell 10 is assembled. Since the polarities of the adjacent stack parts 21 and 23 are different from each other, it is easy to make the electric installation more compact. Moreover, stack parts having the same configuration can be used even for stack parts to have inverted polarities. Hence, the stack parts have excellent versatility, are easy to manufacture, and are also capable of avoiding problems of limiting the layout position of the fuel cell 10 to some particular ones and of mistakenly stacking the stack parts.

Fig. 17 is a schematic view of Alternative Example 1 according to Embodiment 1.

The number of stacks to be disposed in parallel with each other in the X-direction and electrically connected to each other in series is not limited to two as described above. For example, a fuel cell 10A may also be formed of four stacks 20, 22, 26 and 28 as shown in Fig. 17. Since the polarities of the stacks 20, 22, 26 and 28 are inverted from each other, it is easy to dispose the stacks 20, 22, 26 and 28 in parallel to form a module, and possible to make the electric installation more compact.

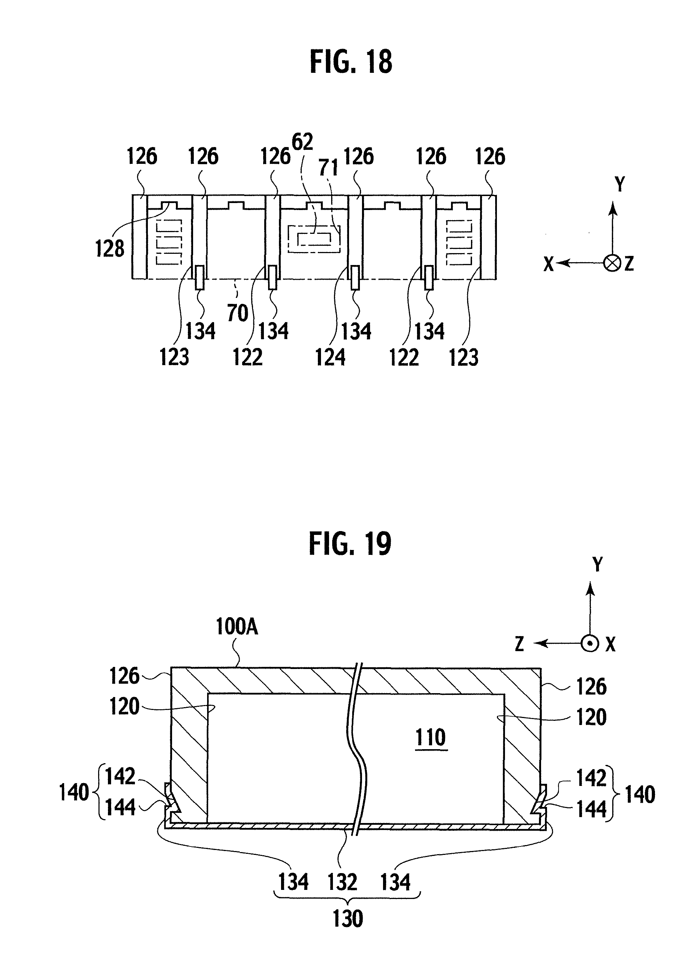

Fig. 18 and Fig. 19 are a front view and a cross-sectional view of Alternative Example 2 according to Embodiment 1, respectively.

An assembly jig 100A according to Alternative Example 2 is different from the assembly jig 100 in that the assembly jig 100A further includes multiple presser jigs for pressing the stack part 21 housed in the recess part 110. The presser jigs are made of a material with flexibility, and each include a cover member 130 and fastening mechanisms 140 for detachably fastening the cover member 130 to the main body of the assembly jig 100A including the recess part 110.

The cover member 130 is formed of a strip-like plate extending in the Z-direction. The plate includes: a base part 132 extending in the Z-direction along the other Y-direction side surface of the stack part 21 housed in the recess part 110; and extension parts 134 bent respectively from both Z-direction end portions of the base part 132 toward the one Y-direction side and each extending in the Y-direction along the Z-direction outer surfaces of the projection parts 126 of the sidewalls 120. Although being positioned on the Z-direction outer surfaces of the projection parts 126 of the sidewalls 120, the extension parts 134 have an X-direction width which is smaller than that of the projection parts 126 so as to prevent interference with the thermal extension absorbers 75, the tension plates 86 and the like to be inserted into the cutout parts 122 to 124.

The fastening mechanisms 140 each include: a concave part 142 formed in the Z-direction outer surface of the projection part 126 of the corresponding sidewall 120; and a convex part 144 formed on the Z-direction inner surface of the corresponding extension part 134 of the cover member 130. The Y-Z cross section of the concave part 142 is a right-angled triangle shape having the oblique line on the Z-direction inner side while the base is positioned on the other Y-direction side, that is, on the side of the base part 132 of the cover member 130. The convex part 144 has a shape which can fit to the concave part 142.

Accordingly, after the stack part 21 is housed in the recess part 110 of the assembly jig 100A, the base part 132 of the cover member 130 of each of the presser jigs is disposed on the outer side (the other Y-direction side) of the stack part 21, and the convex parts 144 formed in the extension parts 134 of the cover member 130 are engaged with the concave parts 142 formed in the projection parts 126 of the sidewalls 120 by using the flexibility of the entire presser jig. Thereby, the stack part 21 housed in the assembly jig 100A is fixed in this state. Thus, the stack part 21 can reliably be prevented from falling off from the recess part 110 of the assembly jig 100A.

Then, after the tension plates 86 and 87 and the connecting members 88 of the tightening mechanism 85 are attached to the stack part 21, the convex parts 144 are pulled apart from the projection parts 126 of the sidewalls to thereby release the convex parts 144, engaged with the concave parts 142, from the concave parts 142. Thereby, the cover member 130 is removed from the main body of the assembly jig 100A.

The extension parts 134 of the cover member 130 are detachably engaged with the sidewalls 120 of the main body of the assembly jig 100A by using the flexibility of the entire presser jig as described above. Thus, the base part 132 of the cover member 130 prevents the stack part 21 from falling off from the recess part 110. Moreover, since the attachment of the presser jig uses its flexibility, the presser jig can be attached simply by a single operation, and a step of tightening a bolt or the like is not needed.

The shape of the cover members 130 is not limited to a strip-like shape, and may be such a plate-like shape that the cover members 130 would collectively cover the entire recess part 110. The configuration of fastening mechanisms 140 is not limited to that in which the convex part 144 is engaged with the concave part 142 by using the flexibility of the entire presser jig, and may employ that in which a bolt is fixed with a nut, for example.

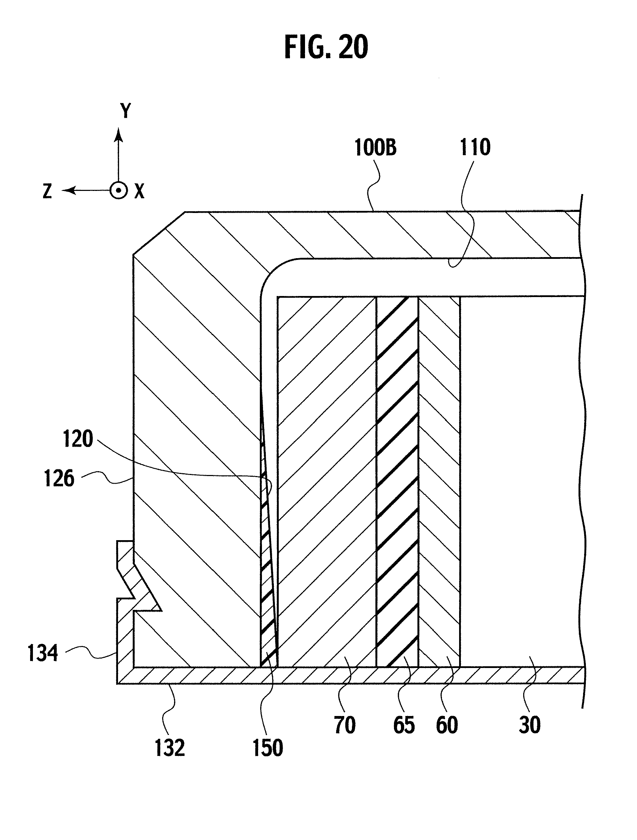

Fig. 20 is a cross-sectional view of Alternative Example 3 according to Embodiment 1.

An assembly jig 100B according to Alternative Example 2 is mainly different from the assembly jig 100A according to Alternative Example 1 in that the assembly jig 100B includes an elastic member 150 disposed between the Z-direction inner surface of each of the sidewalls 120 of the main body of the assembly jig 120 and the Z-direction outer surface of the corresponding end plate 70 of the stack part 21.

The elastic members 150 are disposed respectively on the Z-direction inner surfaces (back surfaces of the projection parts 126) of the sidewalls 120 functioning as pressing parts which apply Z-direction pressing force to the stack part 21. With the elastic members 150, even when pressing force is locally applied to the projection parts 126 by the deformation of the extension parts 134 at the time of engaging the extension parts 134 of the presser jig with the projection parts 126 of the sidewalls 120 in order to press the outer surface (the other Y-direction side surface) of the stack part 21 by the presser jig, the pressing force can be dispersed by the elastic members 150, and the contact pressure applied to the stack part 21 can thereby be made even. Consequently, stack shift (the positions of the unit cells and the like of the stacked body 30 forming the stack part 21 are shifted in the X-direction or the Y-direction) can be prevented.

The elastic members 150 is preferably set to have a thickness which gradually increases from the side of the bottom surface of the recess part 110 to the other Y-direction side, instead of having a uniform thickness, and to have a substantially triangular cross-sectional shape in the Y-Z cross section. In this case, the contact pressure applied to the stack part 21 can be made even further reliably.

As described above, each stack part of the fuel cell according to Embodiment 1 has the configuration that: the communication passages communicating with the collecting manifolds are opened in the end portions of the both electrodes; the end portions of the both electrodes have the same shape; and either one of the ends selected from the both ends of each of the communication passages can be sealed. Accordingly, by sealing the selected one end of each of the communication passages and then inverting the stack parts, the stack parts having different polarities from each other can be obtained.

With this configuration, even when multiple stack parts are used, complex electric installation and piping installation of the fuel cell are not required, and the fuel cell can thus easily be made compact. In short, a compact fuel cell which has excellent versatility is provided.

Furthermore, each of the membrane electrode assemblies has a point-symmetrical shape, in the plane of the power generation region, with the center C₂ as the center of symmetry, the center C₂ corresponding to the X-direction center and the Y-direction center of the membrane electrode assembly 40, and each of the separators 50 has a point-symmetrical shape, in the plane of the passage part 56, with the center C₃ as the center of symmetry, the center C₃ corresponding to the X-direction center and the Y-direction center of the separator 50. Thus, even though the polarities of the separators are inverted from each other, the separators have the same configuration and thereby have such excellent versatility that problems of limiting layout positions thereof and of mistakenly stacking the separators can be avoided.

Each of the sealers for sealing one ends of the communication passages includes the main body part and the projection parts extending from the end surface of the main body part and inserted into the communication passage parts. Thus, with such a simple configuration, the sealers can seal one ends of the communication passages.

Since the fuel cell includes thermal expansion absorbers, the clamp load of the stacked bodies can be maintained even when the stacked bodies expand or contract in the Z-direction. Accordingly, it is possible to prevent variation in properties among unit cells and deterioration of the fuel cell such as poor sealing properties.

The fuel cell includes multiple stack parts, and the stack parts are alternately inverted and are arranged in parallel. Since the polarities of the stack parts arranged in parallel are alternately inverted, the stack parts can be easily formed into a module by being arranged in parallel, and the electric installation can be made compact.

The assembly method according to Embodiment 1 includes: the stack part forming step of forming the stack parts; and the sealing step of sealing one ends of the communication passage parts. Accordingly, by alternately inverting the stack parts, the polarities of the stack parts can be inverted from each other. Thus, even when multiple stack parts are used, complex piping installation of the fuel cell is not required, and the fuel cell can thus easily be made compact. Hence, an assembly method of a compact fuel cell which has excellent versatility is provided.

In the sealing step, each of the stack parts is housed in the recess part of the assembly jig including the sidewalls having the cutout parts which are formed so that the communication passage parts would be exposed, and the projection parts of the sealer are inserted into the communication passage parts. Accordingly, in the sealing step, interference with the sidewalls of the main body of the assembly jig can be prevented, and consequently the projection parts of the sealer can be inserted into the communication passage parts while the stack part is housed in the recess part. Hence, excellent workability can be provided.

Each of the sidewalls of the main body of the assembly jig includes the projection parts adjacent to the cutout parts, and the sealers are positioned in the first cutout parts of the sidewalls by the projection parts of the sidewalls in the sealing step. Thus, the sealers can easily be positioned.

In the stack part forming step, the thermal expansion absorbers are disposed. With the thermal expansion absorbers, the clamp load of the stacked body can be maintained in the assembled fuel cell, thereby preventing variation in properties among unit cells and deterioration of the fuel cell such as poor sealing properties.

The assembly method further includes the inversely disposing step of alternately inverting the stack parts and then arranging the stack parts in parallel. By this step, the polarities of the stack parts arranged in parallel are different from each other, the stack parts arranged in parallel can be easily formed into a module, and the electric installation can be made more compact.

In the stack part forming step, the outer surface of the stack part housed in the recess part of the assembly jig is pressed by the presser jig of the assembly jig. The presser jig is formed of a material having flexibility, and includes: the base part extending along the outer surface of the stack part housed in the recess part; and the extension parts bent respectively from the end portions of the base part and extending along the corresponding sidewalls of the main body of the assembly jig. The extension parts are detachably engaged respectively with the sidewalls of the recess part by using the flexibility. With this configuration, the stack part is prevented from falling off from the recess part. Moreover, since the attachment of the presser jig uses its flexibility, the presser jig can be attached simply by a single operation, and a step of tightening a bolt or the like is not needed.

The apparatus for assembling the fuel cell according to Embodiment 1 includes the assembly jig having the recess part for housing the stack part. The assembly jig includes sidewalls to face the end surfaces of the stack part, and each of the sidewalls includes cutout parts which are formed so that the communication passage parts of the stack part would be exposed. Accordingly, when the one ends of the communication passages are sealed, interference with the sidewalls is prevented, and the stack can be assembled while the stack part is housed in the recess part. Hence, an assembly apparatus for efficiently assembling a compact fuel cell which has excellent versatility is provided.

Each of the wall parts includes the projection parts adjacent to the cutout parts. Thus, by using the projection parts, the sealers can easily be positioned in the cutout parts.

Each of the sidewalls includes the cutout parts for disposing the thermal expansion absorbers on the end surfaces of the stack parts. Accordingly, interference between the sidewalls and the thermal expansion absorbers to be disposed on the outer sides of the stack part can reliably be prevented.

The size of the projection parts of the sidewalls is set so that the projection parts of the sidewalls and the pressure plates would be spaced from each other when the pressure plates are disposed on the outer sides of the thermal expansion absorbers. Accordingly, interference between the projection parts of the sidewalls and the pressure plates disposed on the outer sides of the thermal expansion absorbers can reliably be prevented.

The assembly apparatus further includes the presser jig for pressing the stack part housed in the recess part. The presser jig is formed of a material having flexibility, and includes: the base part extending along the outer surface of the stack part housed in the recess part; and the extension parts bent respectively from the end portions of the base part and extending along the corresponding sidewalls of the main body of the assembly jig. The extension parts are detachably engaged respectively with the sidewalls of the recess part by using the flexibility. With this configuration, the stack part is prevented from falling off from the recess part. Moreover, since the attachment of the presser jig uses its flexibility, the presser jig can be attached simply by a single operation, and a step of tightening a bolt or the like is not needed.

The assembly apparatus includes the elastic members disposed between the end surfaces of the stack part and the sidewalls of the main body of the assembly jig with which the extension parts are engaged. Accordingly, even when pressing force is locally applied to the sidewalls of the main body of the assembly jig due to the deformation of the extension parts, the contact pressure applied to the stack part can be made even by the elastic members, and stack shift and the like can be prevented.

### <Embodiment 2>

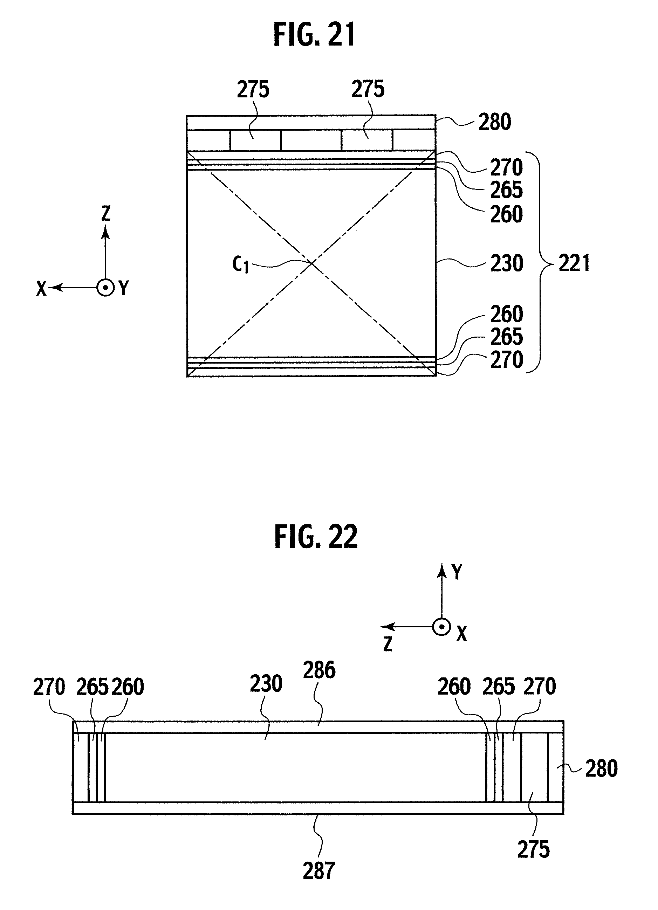

Fig. 21, Fig. 22 and Fig. 23 are plan view, a side view and a front view of a stack of a fuel cell according to Embodiment 2, respectively. In the following, members having the same functions as those in Embodiment 1 are referred to as the same names or are denoted by similar symbols, and description of those members is omitted to avoid repetition.

Embodiment 2 is mainly different from Embodiment 1 including the thermal expansion absorbers and the pressure plates disposed on both of the Z-direction end surfaces of the stack part 21, in that thermal expansion absorbers 275 and a pressure plate 280 are disposed only on one of both Z-direction end surfaces of a stack part 221.

Specifically, the stack part 221 includes: a stacked body 230; a pair of current collecting plates 260 disposed respectively on Z-direction outer side ends of the stacked body 230; a pair of insulating plates 265 disposed respectively on Z-direction outer sides of the pair of current collecting plates 260; and a pair of end plates 270 disposed respectively on Z-direction outer sides of the pair of insulating plates 65.

The thermal expansion absorbers 275 and the pressure plate 280 are sequentially disposed on a Z-direction outer side of the end plate 270 which is disposed on one Z-direction side. The connecting members 288 of tightening mechanism 285 is disposed between the other Z-direction side surface of the end plate 270 disposed on the other Z-direction side of the stack part 221 and the one Z-direction side surface of the pressure plate 280. The connecting members 288 each connect a tension plate 286 extending along one Y-direction side side-surface of the stack part 221 in the Z-direction and a tension plate 287 extending along the other Y-direction side side-surface of the stack part 221 in the Z-direction, to thereby tighten the stacked body 230 in a pressurized state (in a state where unit cells are pressed against each other).

As described above, the thermal expansion absorbers 275 and the pressure plate 280 are attached to the stack part 221 asymmetrically, different from Embodiment 1. In other words, the thermal expansion absorbers 275 and the pressure plate 280 are not disposed on the other Z-direction side end surface of the stack part 221, thus reducing the number of members. In Fig. 21, the tightening mechanism 285 is omitted.

Next, a method for assembling the fuel cell according to Embodiment 2 will be described.

In a stack part forming step, first, the stacked body 230 is formed as in Embodiment 1. Then, the current collecting plates 260, the insulating plates 265 and the end plates 270 are sequentially and symmetrically disposed on the both Z-direction end sides of the stacked body 230. Thereby, the stack part 221 is formed. Here, the stack part 221 is housed in the recess part 110 of the assembly jig 100 while being pressed in the Z-direction (stacking direction).
The thermal expansion absorbers 275 are disposed on the one Z-direction side end plate 70 through the cutout parts 122 formed in the sidewalls 120 of the main body of the assembly jig 100. In this event, the thermal expansion absorbers 275 are positioned in the X-direction and the Y-direction by the projection parts 126. Then, the pressure plate 280 is disposed on the Z-direction outer sides of the thermal expansion absorbers 275. Here, a Z-direction space is provided between the Z-direction outer side of each of the projection parts 126 and the pressure plate 280, thus preventing interference therebetween.

The tension plates 286 and 287 of the tightening mechanism 285 are attached to the stack part 221. Of these, the tension plates 286 are inserted from the end openings of the groove parts 128 formed in the bottom surface of the recess part 110. Thereafter, the connecting members 288 are disposed on the pressure plate 280 and are then connected to the end portions of the tension plates 286 and 287. The tightening mechanism 285 is thus attached to the stack part 221, and the force pressing the unit cells of the stack part 221 in the Z-direction (stacking direction) is retained.

In the sealing step, the communication passage parts of the end plates 270 are sealed by the sealers as in Embodiment 1.

Thereafter, the assembly jig 100 is pulled out toward the one Y-direction side, and is thereby removed from the stack part 221. Thus, the thermal expansion absorbers 275 and the pressure plate 280 are disposed only on the one Z-direction side end portion of the stack part 221, and the stack with a reduced number of members is obtained.

As described above, in Embodiment 2, the thermal expansion absorbers 275 and the pressure plate 280 are not disposed on the other Z-direction side end portion of the stack part 221. Consequently, the number of members can be reduced compared with that in Embodiment 1.

### <Embodiment 3>

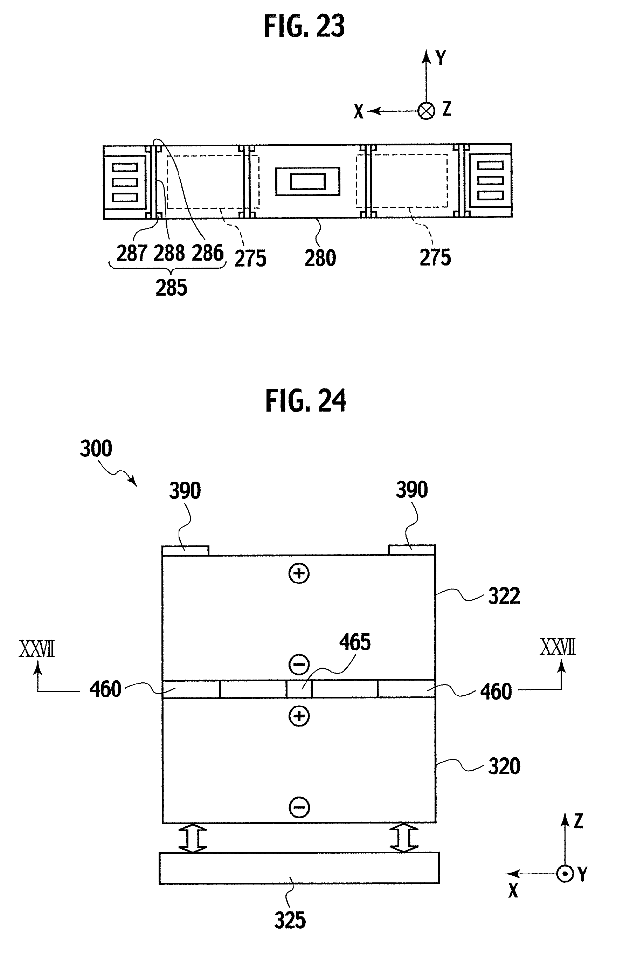

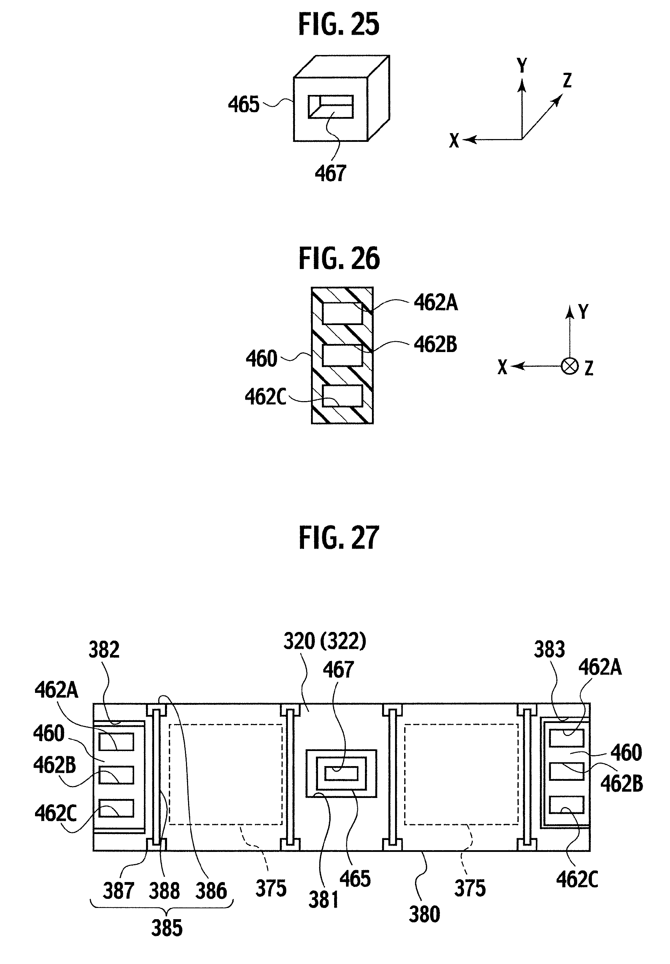

Fig. 24 is an overview of a fuel cell according to Embodiment 3; Fig. 25 is a perspective view of a conductor shown in Fig. 24; Fig. 26 is a front view of a grommet shown in Fig. 24; Fig. 27 is a front view for illustrating arrangement of the conductor and grommets. In the following, members having the same functions as those in Embodiment 1 and Embodiment 2 are referred to as the same names or are denoted by similar symbols, and description of those members is omitted to avoid repetition.

A fuel cell 300 according to Embodiment 3 is different from the fuel cell 10 according to Embodiment 1 including the stacks 20 and 22 arranged in the X-direction in parallel with each other, in that the fuel cell 300 includes stacks 320 and 322 arranged in the Z-direction in series. The fuel cell 300 makes it easy to form a module by disposing the stacks (stack parts) 320 and 322 in series, and forms a compact fuel providing high output. In Fig. 24, a stack case to be described later is omitted.

The fuel cell 300 further includes a conductor (high-voltage wiring) 465, grommets 460 and sealers 390. The conductor 465 is formed of copper compression moldings having a substantially block-like shape, for example. In one Z-direction side surface of the conductor 465, a concave part 467 having a shape corresponding to an output terminal 362 of the stack 320 is formed, while, in the other Z-direction side surface, a concave 467 having a shape corresponding to an output terminal 362 of the stack 322 is formed. The conductor 465 is disposed between the stacks 320 and 322 adjacent to each other so as to be aligned with the positive output terminal 362 of the stack 320 and the negative output terminal of the stack 322, and is then electrically connected with the both output terminals 362.

The conductor 465 is pressed and flattened between the stacks 320 and 322 while the two output terminals 362 are respectively inserted into the concave parts 467 formed in the both Z-direction side surfaces of the conductor 465. Thereby, the conductor 465 and each of the output terminals 362 are connected firmly. The output terminals 362 of the stacks 320 and 322 are respectively exposed from central through-holes 381 formed in pressure plates 380 of the stack parts of the stacks. The pressure plates 380 each retain force to press a stacked body in the stack part in the Z-direction (stacking direction) by tightening mechanism 385 including strip-like tension plates 386 and 387 and connecting members 388.

The grommets 460 are made of an elastic body such as rubber, for example. In the both Z-direction side surfaces of each of the grommets 460, through-holes 462A to 462C are formed so as to be aligned in the Y-direction in parallel. The through-holes 462A to 462C have arrangement and shapes corresponding to the openings of communication passage parts of the stack parts of the stacks. The grommets 460 are disposed between the stacks 320 and 322 adjacent to each other, and are attached to the open parts 382 and 383 of both of the pressure plates 380 of the stacks 320 and 322. Here, the through holes 462A to 462C of each of the grommets 460 are aligned respectively with the openings of the corresponding communication passage part of the stack parts of the stacks 320 and 322 disposed respectively on the both Z-direction sides of the grommet 460. When the grommet 460 is pressed between the stacks 320 and 322 in a serially disposing step to be described later, the both Z-direction side surfaces of the grommet 460 abut against the periphery of the openings of the communication passage parts of the stacks 320 and 322. Here, the through-holes 462A to 462C of the grommet 460 form communication passages together with the communication passage parts of the stack parts of the stacks 320 and 322, and communicate with a collecting manifold 482 for allowing fuel gas, coolant and oxidant gas to flow.

As described above, in the fuel cell 300, electrical connection between the output terminals of the stack parts adjacent to each other and connection of the communication passages can be made by use of such a simple configuration. Here, the numeral 375 denotes a thermal expansion absorber disposed between an end plate (not illustrated) and the corresponding pressure plate 380.

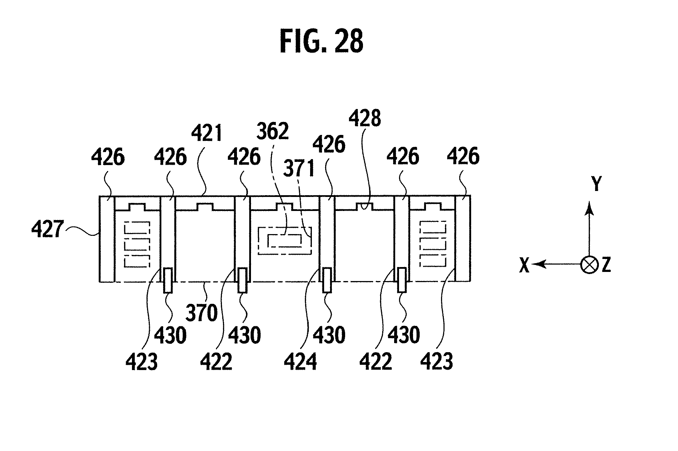

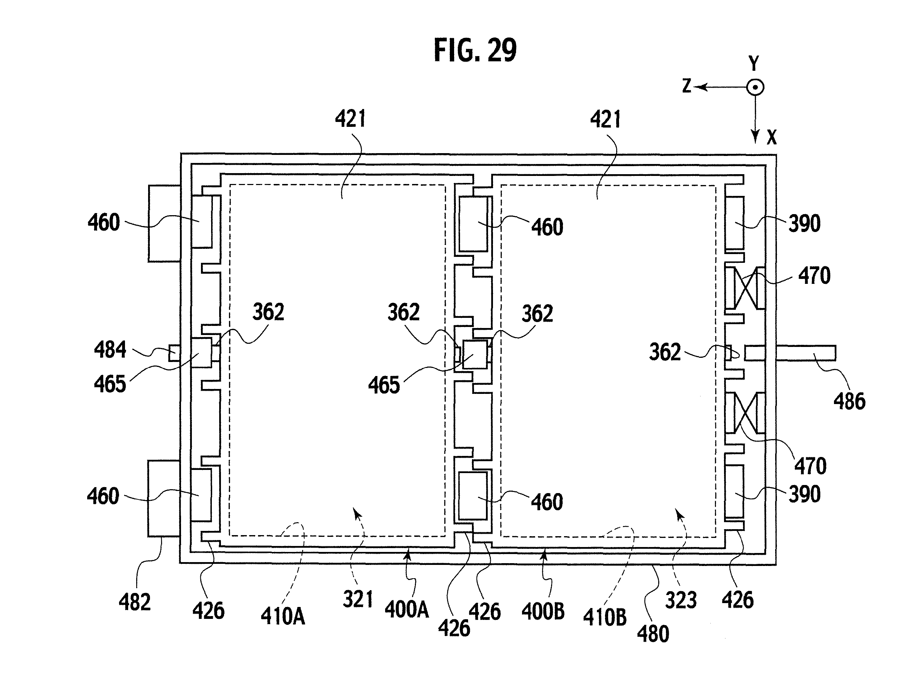

Fig. 28 is a plan view of an apparatus for assembling the fuel cell according to Embodiment 3; Fig. 29 is a front view of assembly jigs shown in Fig. 28.

The assembly apparatus includes: assembly jigs 400A and 400B respectively including recess parts 410A and B; presser jigs; and press devices 470. The assembly jigs 400A and 400B have the same shape, and each include: a bottom wall 421 on one Y-direction side of the assembly jig; sidewalls 420 extending respectively from both Z-direction ends of the bottom wall 421 to the other Y-direction side (lower side in the drawing); and sidewalls 427 extending respectively from both X-direction ends of the bottom wall 421 to the other Y-direction side (lower side in the drawing). The bottom wall 421, the sidewalls 420 and the sidewalls 427 together define the recess part 410A or 410B opened toward the other Y-direction side.

The recess parts 410A and 410B respectively houses the stack parts 321 and 323 therein, more specifically, between the sidewalls 420, while pressing the stack parts 321 and 323 in the Z-direction (stacking direction), and are used: to position the thermal expansion absorbers 375, the sealers 390 and the like on the end plates 370 to thereby attach the thermal expansion absorbers 375, the sealers 390 and the like to the thus housed stack parts 321 and 323; and to attach the tightening mechanism 385 to the stack parts 321 and 323. The assembly jigs 400A and 400B are arranged in the Z-direction in series in the stack case 480 of the fuel cell 300, and are used to assemble the fuel cell. Thus, high efficiency in assembly work of the fuel cell in which the stack parts are arranged in series is achieved.

The sidewalls 420 abut against the end plates 370 of the stack parts 321 and 323 housed respectively in the recess parts 410A and 410B. The sidewalls 420 each include: cutout parts 422 to 424 each closed on the one Y-direction side while opened on the other side; and projection parts 426 to be described later.

The cutout parts (second cutout parts) 422 are provided to be used to dispose the thermal expansion absorbers 375 to the end plates 370 of the stack parts housed in the recess parts 410A and 410B, and have such arrangement and a shape that interference between the thermal expansion absorbers 375 and the sidewalls 420 would reliably be prevented.

The cutout parts (first cutout parts) 423 are provided to be used to attach the sealers 390 to the communication passage parts of the end plates 370 of the stack parts housed in the recess parts 410A and 410B. The cutout parts 423 are formed so as to be aligned with the communication passage parts, and have such arrangement and a shape that interference between the sealers 390 and the sidewalls 420 would reliably be prevented.

The cutout parts (third cutout parts) 424 are aligned with the central through-holes 371 of the end plates 370. The cutout parts 424 are formed so that the output terminals 362 of the current collecting plates of the stack parts housed in the recess parts 410A and 410B would be exposed, and have such arrangement and a shape that interference between the output terminals 362 and the sidewalls 420 would reliably be prevented.

The projection parts 426 are formed on the sidewalls 420 near the cutout parts 422 and 423 to project outward in the Z-direction, and are formed to be offset from each other in the X-direction so that the projection parts 426 of the assembly jig 400A and the assembly jig 400B, which are adjacent when arranged in the Z-direction in the stack case 480, would engage with each other. In other words, the shape of one Z-direction side end surface and the other Z-direction side end surface of each of the assembly jigs 400A and 400B is asymmetrical with respect to an X-direction central line or a Z-direction central line of the assembly jig. Accordingly, the projection parts 426 are used to position the thermal expansion absorbers 375 and the sealers 390 in the X-direction and the Y-direction when the thermal expansion absorbers 375 and the sealers 390 are attached to the stack parts 321 and 323 in the recess parts 410A and 410B, and are also used to position the assembly jigs 400A and 400B when the assembly jigs 400A and 400B are disposed in series in the stack case 480. Thus, the projection parts 426 makes it easy to arrange the assembly jigs 400A and 400B in the stack case 480.

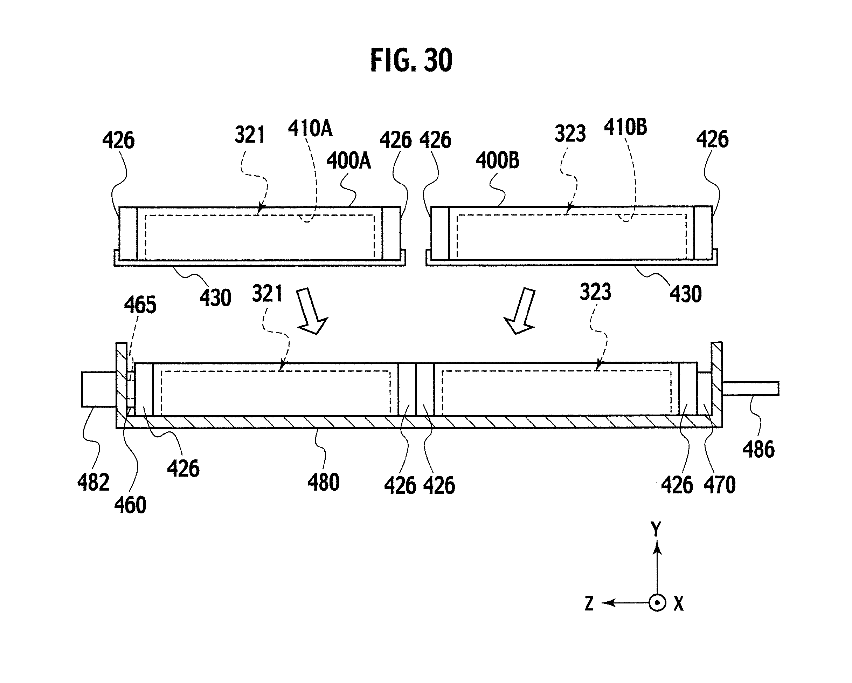

In the bottom surfaces of the recess parts 410A and 410B (the other Y-direction side surface of the bottom walls 421), multiple groove parts 428 extending in the Z-direction are formed. The groove parts 428 each have a width and a depth capable of receiving the corresponding tension plate 386, and the Z-direction end portions of the groove part 428 are opened on the closing end side of the cutout parts 422 to 424. Accordingly, the tension plates 386 can be inserted from the end openings while the stack parts 321 and 323 are inserted in the recess parts 410A and 410B. Hence, the stack parts 321 and 323 can be tightened by the tightening mechanism 385 while the stack parts 321 and 323 are inserted into the recess parts 410A and 410B.
As in Embodiment 2, the presser jigs are used to hold the stack parts 321 and 323 housed in the recess parts 410A and 410B, and each include a cover member 430 (see Fig. 30) and fastening mechanisms (not illustrated).

The press devices 470 have two jack units, for example, and are used, after the stack parts 321 and 323 housed in the recess parts 410A and 410B of the assembly jigs 400A and 400B are pressed in the Z-direction (stacking direction) at the same time, to attach the tightening mechanism such as the tension plates 386 to the stack parts 321 and 323. The press devices 470 are disposed between the other Z-direction end portion of the assembly jig 400B (the assembly jig positioned on the other Z-direction side among the multiple assembly jigs disposed in series) and a wall surface of the other Z-direction side sidewall of the stack case 480, the wall surface facing the assembly jig 400B. Thereby, the press devices 470 press the stack parts 321 and 323 disposed in series in the stack case, in the Z-direction at the same time. Since the stack parts 321 and 323 are pressed while being disposed in the stack case, the tension plates are attached to the stack parts easily and efficiently.

Before the pressing by the press devices 470, the conductor 465 and the grommets 460 are disposed between the one Z-direction side sidewall of the stack case 480 and the one Z-direction end portion of the assembly jig 400A and between the other Z-direction end portion of the assembly jig 400A and the one Z-direction end portion of the assembly jig 400B (between adjacent assembly jigs).

The conductor 465 disposed between the stack case 480 and the assembly jig 400A is aligned with a bus bar (high-voltage wiring) 484 disposed in a central portion of the one Z-direction side sidewall of the stack case 480 and the cutout parts 424 of the assembly jig 400A. Similarly, the grommets 460 are aligned with the collecting manifolds 482 disposed on the sidewall of the stack case 480 near both X-direction end portions, and the cutout parts 423 of the assembly jig 400A.

The conductor 465 disposed between the assembly jig 400A and the assembly jig 400B is aligned with the cutout parts 424 of the assembly jigs 400A and 400B. Similarly, the grommets 460 are aligned with the cutout parts 423 of the assembly jigs 400A and 400B.

Thus, the press devices 470 apply Z-direction pressing force at the same time to the stack parts 321 and 323 housed in the recess parts 410A and B of the assembly jigs 400A and 400B adjacent to each other. Thereby, electrical connection of the output terminals 362 and connection of the communication passages are made speedily and easily. Moreover, electrical connection with the bus bar 484 of the stack case 480 and connection between the collecting manifolds 482 and the communication passages can also be made at the same time.

Here, the press devices 470 provide pressing force for pressing and flattening the conductors 465 while the output terminals 362 of the stack parts 321 and 323 are inserted into the concave parts 467 of the conductors 465. Accordingly, the conductors 465 and the output terminals 462 can be connected firmly.

Next, a method for assembling the fuel cell according to Embodiment 3 will be described.

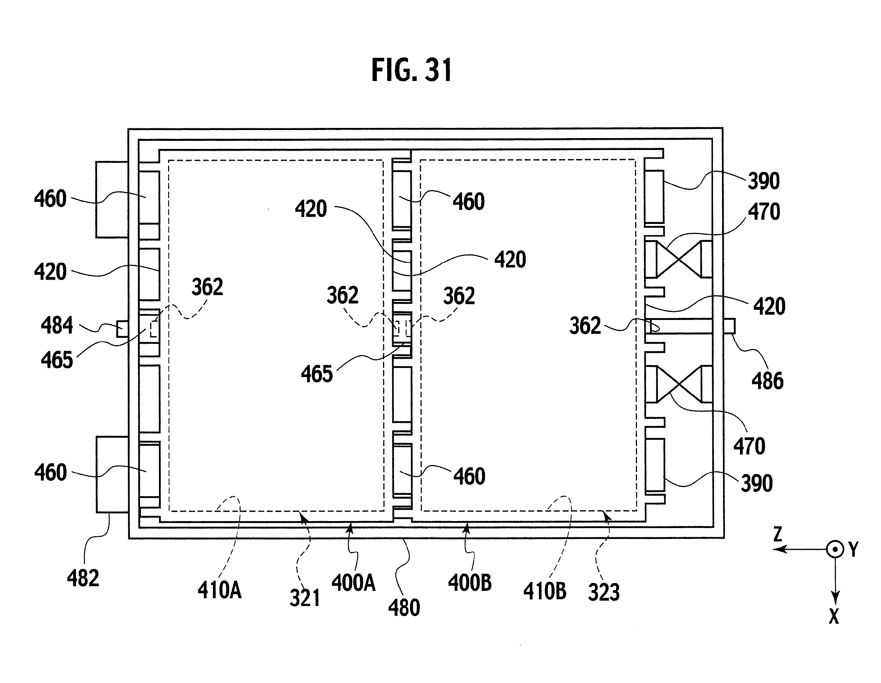

Fig. 30 is a cross-sectional view of serial arrangement of the assembly jigs 400A and 400B in a stack case; Fig. 31 is subsequent to Fig. 30, and is a plan view for illustrating the pressing performed on the stack parts housed respectively in the recess parts of the serially arranged assembly jigs.

The assembly method includes: a stack part forming step of forming the stack parts 321 and 323; a sealing step of selectively sealing the communication passage parts of one of the end plates 370 by the sealers 390 in order to selectively seal one ends of the communication passages of each of the stack parts; and a serially disposing step of disposing, in series in the stack case 480, the stack parts 321 and 323 housed respectively in the recess parts 410A and B of the assembly jigs 400A and 400B. Accordingly, a fuel cell in which multiple stack parts are disposed in series can be assembled efficiently.

In the stack part forming step, the membrane electrode assembly and the separator are alternately stacked in the recess parts 410A and B of the assembly jigs 400A and 400B to sequentially form unit cells, so that the stacked bodies are formed. Then, the current collecting plates, the insulating plates and the end plates 370 are sequentially and symmetrically disposed on the both Z-direction end outer sides of each of the thus obtained stacked bodies. Thereby, the stack parts 321 and 323 are formed. At this time, the stack parts 321 and 323 are housed in the recess parts 410A and B of the assembly jigs 400A and 400B while being pressed in the Z-direction (stacking direction). Thereafter, the cover members 430 of the presser jigs are attached to prevent the stack parts 321 and 323 housed in the recess parts 410A and B, from falling off.

The thermal expansion absorbers 375 are disposed on the end plates 370 through the cutout parts 422 formed in the sidewalls 420 of the assembly jigs 410A and B. In this event, the thermal expansion absorbers 375 are positioned in the X-direction and the Y-direction by the projection parts 426. Then, the pressure plates 380 are disposed respectively on the Z-direction outer sides of the thermal expansion absorbers 375.

In the sealing step, the communication passage parts of the end plates 370 of the stack part 323 are sealed by the sealers 390 in order to selectively seal the one ends of the communication passages of the stack part. In this event, the sealers 390 are moved to the communication passage parts of the end plates 370 through the cutout parts 423 and the open parts 382 and 383 of the pressure plates 380, and are positioned in the X-direction and the Y-direction by the projection parts 426 adjacent to the cutout parts 423. Then, the projection parts of the sealers 390 are inserted into the openings of the communication passage parts of the end plates 370.

In the serially disposing step, the assembly jigs 400A and 400B (recess parts 410A and B) housing the stack parts 321 and 323 are disposed in series in the Z-direction in the stack case 480 (see Fig. 29 and Fig. 30). In this step, the projection parts 426 of the assembly jig 400A and the projection parts 426 of the assembly jig 400B which are facing are offset from each other so as to engage with each other, and are hence used to position the assembly jigs 400A and 400B. With this configuration, the assembly jigs 400A and 400B can easily be disposed in series in the stack case 480.

The grommets 460 and the conductor 465 are disposed between the assembly jig 400A and the stack case 480 on the one Z-direction side of the assembly jig 400A, and are also disposed between the assembly jig 400B and the recess part 410B. The press devices 470 are disposed between the assembly jig 400B and the stack case 480 on the other Z-direction side of the assembly jig 400A.

At this time, the conductor 465 disposed between the stack case 480 and the assembly jig 400A is aligned with the bus bar 484 of the stack case 480 and the corresponding cutout part 424 of the assembly jig 400A. Similarly, the grommets 460 are aligned respectively with the collecting manifolds 482 of the stack case 480 and also respectively with the cutout parts 423 of the assembly jig 400A. The conductor 465 disposed between the assembly jig 400A and the assembly jig 400B is aligned with the cutout parts 424 of the assembly jigs 400A and 400B. Similarly, the grommets 460 are aligned respectively with the cutout parts 423 of the assembly jig 400A and also respectively with the cutout parts 423 of the assembly jig 400B.

When the press devices 470 operate, the stack parts 321 and 323 housed respectively in the recess parts 410A and B of the assembly jigs 400A and 400B are applied with pressing force in the Z-direction (stacking direction), and consequently move in the one Z-direction side in the stack case 480 while coming closer to each other (see Fig. 31). Thus, electrical connection of the output terminals of the stack parts housed in the assembly jigs adjacent to each other and connection of the communication passages are made speedily and easily. Here, the conductors 465 are pressed and flattened by the pressing force applied by the press devices 470 while the output terminals 362 of the stack parts 321 and 323 are inserted into the concave parts 467. Accordingly, the conductors and the output terminals can be connected firmly.

The stretch of the press devices 470 is controlled so that the Z-direction (stacking direction) length of the stack parts 321 and 323 (the length from the one Z-direction side end part of the stack part 321 to the other Z-direction side end part of the stack part 323, the stack parts 321 and 323 disposed in series) would be shorter than the Z-direction (stacking direction) length of the cover members 430 of the assembly jigs (the total value of the Z-direction lengths of the cover members 430).

Thereafter, the tension plates 386 and 387 and the connecting members 388 of the tightening mechanisms 385 are attached to the stack parts 321 and 323, and the force which presses the unit cells of each of the stack parts 321 and 323 in the Z-direction (stacking direction) is retained. Thus, the stack parts 321 and 323 housed respectively in the recess parts 410A and B are pressed while being disposed in the stack case 480. Accordingly, the tension plates 368 and 387 can be attached easily and efficiently.

Thereafter, the press devices 470 are removed from the stack case 480, the cover members 430 of the presser jigs are removed from the assembly jigs 400A and 400B, and the assembly jigs 400A and 400B are then pulled out toward the one Y-direction side to thereby be separated from the stack parts 321 and 323.

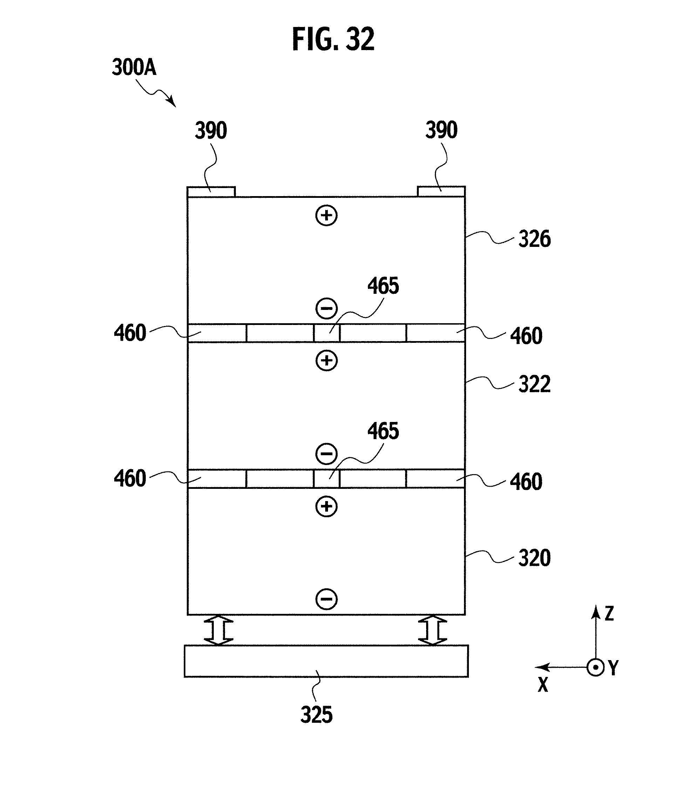

Fig. 32 is a schematic view of Alternative Example of the fuel cell according to Embodiment 3.

The number of stacks to be disposed in series in the Z-direction is not limited to two. For example, a fuel cell 300A may be formed by disposing three stacks 320, 322 and 326 in the Z-direction. In this case, the grommets 460 and the conductor 465 are disposed between the stack 320 and the stack 322 and also between the stack 322 and the stack 326, and thereby make electrical connection of the stacks 320, 322 and 326 and connection of communication passages. The openings of the communication passage parts of the stack 326, disposed farthest from the piping installation 325, are sealed by the sealers 390. Thus, a module can be easily formed with the stack parts connected in series, and a fuel cell in which multiple stack parts are disposed in series can be assembled efficiently.

As described above, since multiple stack parts are arranged in series in the fuel cell according to Embodiment 3, the stack parts can easily be formed into a module by being arranged in series, and a compact fuel cell providing high output can be made.

In addition, a conductor and grommets are disposed between end parts of adjacent stack parts. Accordingly, electrical connection of output terminals of the adjacent stack parts and connection of communication passages can be made with such a simple configuration.

The end surfaces of the conductor electrically connected with the output terminals each have a concave part, and the conductors are pressed and flattened while the output terminals of the stack parts are inserted into the concave parts. Accordingly, the conductors and the output terminals of the stack parts can be connected firmly.

The assembly apparatus according to Embodiment 3 includes multiple assembly jigs each having a recess part corresponding to a stack part, and the assembly jigs are disposed in series in a stack case of a fuel cell. Accordingly, a fuel cell in which multiple stack parts are disposed in series can be assembled efficiently.

Moreover, adj acent sidewalls of the assembly jigs include projection parts which are offset from each other to engage with each other. Thus, by using the projection part for positioning, the multiple assembly jigs can be easily disposed in series in the stack case.

Further, the assembly apparatus also includes press devices for pressing the stack parts housed in the recess parts, in the Z-direction (stacking direction). Accordingly, by pressing the stack parts, housed in the recess parts, while the stack parts are disposed in the stack case, tension plates can be attached to the stack parts easily and efficiently.

In addition, by pressing with the press devices, electrical connection of the output terminals of the stack parts housed in the recess parts of the adjacent assembly jigs and connection of communication passages can be made speedily and easily. Moreover, by pressing with the press devices, the conductors are pressed and flattened while the output terminals of the stack parts are inserted in concave parts. Thereby, the conductors and the output terminals can be connected firmly.

The assembly method according to Embodiment 3 further includes the serially disposing step of disposing multiple stack parts housed respectively in recess parts of multiple assembly jigs, in series in a stack case. Accordingly, a fuel cell in which multiple stack parts are disposed in series can be assembled efficiently.

Moreover, in the serially disposing step, the assembly jigs are positioned by using projection parts of sidewalls of the assembly jigs, the projection parts offset from each other to be engaged with each other. Hence, the multiple jigs can easily be disposed in series in the stack case. The stack parts respectively housed in the recess parts are pressed in the Z-direction (stacking direction) by the press devices while being disposed in the stack case. Accordingly, tension plates can be attached to the stack parts easily and efficiently.

Since the conductor and the grommets are disposed between the end parts of the adjacent stack parts, electrical connection of the output terminals of the stack parts housed in the recess parts of the adjacent assembly jigs and connection of the communication passages can be made speedily and easily. The end surfaces of the conductor electrically connected with the output terminals each have a concave part, and the conductors are pressed and flattened while the output terminals of the stack parts are inserted into the concave parts. Accordingly, the conductors and the output terminals of the stack parts can be connected firmly.

It is to be noted that the above-described embodiments of the present invention are illustrative only, and the present invention is not limited to the embodiments. For example, the present invention may be configured so that a cutout part for a thermal expansion absorber and a cutout part for a sealer would be integrated, or so that the above-described embodiments would be appropriately combined, for example, any one of Alternative Examples 1 to 3 according to Embodiment 1 is applied to Embodiment 2 or Alternative Example 3 according to Embodiment 1 is applied to Embodiment 3. Thus, any alternation or change within the technical scope of the present invention is within the scope of the invention.

This application claims the priority of Japanese Patent Application No. 2007-036926 filed on February 16, 2007 and Japanese Patent Application No. 2007-293566 filed on November 12, 2007, the entireties of which are incorporated herein by reference.

### Industrial Applicability

According to the fuel cell and the method for assembling the fuel cell of the present invention, the polarities of the stack parts can be inverted from each other by sealing one ends of the communication passages and alternately inverting the stack parts. Moreover, according to the apparatus for assembling a fuel cell of the present invention, at the time of sealing the one ends of the communication passages, interference of the sidewalls of the assembly jigs can be prevented. Accordingly, the assembling is possible while the stack parts are housed in the recess parts of the assembly jigs. Thus, a fuel cell can be configured by using the same stack parts. Hence, a compact fuel cell which has excellent versatility and is easy to manufacture can be provided. In sum, the fuel cell and the method and apparatus for assembling the fuel cell of the present invention are industrially applicable.

## Claims

1. A fuel cell **characterized in that**
the fuel cell comprises a stack part formed by stacking a membrane electrode assembly and a separator,
the membrane electrode assembly and the separator each include a communication passage part to form a communication passage for allowing fuel gas or oxidant gas to flow,
the communication passage formed by the communication passage parts is opened at a positive end portion and a negative end portion of the stack part,
the positive end portion and the negative end portion of the stack part have the same shape, and
one end of the communication passage is sealable.

2. The fuel cell according to claim 1, **characterized in that** the membrane electrode assembly has a point-symmetrical shape with a center of a power generation region thereof as the center of symmetry, while the separator has a point-symmetrical shape with a center of a passage part thereof as the center of symmetry.

3. The fuel cell according to any one of claims 1 and 2, **characterized by** comprising a sealer for sealing the one end of the communication passage, **characterized in that**
the sealer includes a main body part and a projection part extending from an end surface of the main body part and being to be inserted into the communication passage part.

4. The fuel cell according to claim 3, **characterized by** comprising a thermal expansion absorber for absorbing expansion and contraction in a stacked-direction, caused by temperature change, of a stacked body of the membrane electrode assembly and the separator.

5. The fuel cell according to claim 4, **characterized in that**
the stack part includes an end plate and a pressure plate sequentially disposed on each side of the stacked body,
the end plate includes a communication passage part to form the communication passage together with the communication passage parts of the membrane electrode assembly and the separator,
the pressure plate includes an open part aligned with the communication passage part of the end plate,
the thermal expansion absorber is disposed between the end plate and the pressure plate, and
the projection part of the sealer is inserted into the communication passage part of the end plate through the open part of the pressure plate.

6. The fuel cell according to any one of claims 1 to 5, **characterized by** comprising a plurality of the stack parts, **characterized in that**
the plurality of stack parts are disposed to be alternately inverted from and parallel to each other.

7. The fuel cell according to claim 1, **characterized by** comprising a plurality of the stack parts, **characterized in that**
the plurality of stack parts are disposed in series.

8. The fuel cell according to claim 7, **characterized in that**
a conductor and a grommet are disposed between the stack parts adjacent to each other,
the conductor is aligned with output terminals for outputting electromotive force generated in the stack parts, and has end surfaces electrically connected to the output terminals, and
the grommet is aligned with the communication passage parts of the stack parts, and has a through-hole communicating with the communication passages.

9. The fuel cell according to claim 8, **characterized in that**
the end surfaces of the conductor each have a concave part, and
the conductor is pressed and flattened while the output terminals of the stack parts are inserted into the concave parts.

10. A method for assembling a fuel cell **characterized by** comprising:
a stack part forming step of forming a stack part in which a membrane electrode assembly and a separator are stacked, the membrane electrode assembly and the separator each including a communication passage part to form a communication passage for allowing fuel gas or oxidant gas to flow, the communication passage, formed by the communication passage parts, being opened at a positive end portion and a negative end portion, the positive end portion and the negative end portion having the same shape, one end of the communication passage being sealable; and
a sealing step of sealing the one end of the communication passage.

11. The method for assembling a fuel cell according to claim 10, **characterized in that**, in the sealing step,
the stack part is housed in a recess part of an assembly jig including a sidewall having a first cutout part which is formed to expose the communication passage parts, and
a sealer including a main body part and a projection part extending from an end surface of the main body, is set to have the projection part thereof inserted into the communication passage parts.

12. The method for assembling a fuel cell according to claim 11, **characterized in that**
the sidewall includes a projection part adjacent to the first cutout part, and,
in the sealing step, the sealer is positioned at the first cutout part of the sidewall by the projection part of the sidewall.

13. The method for assembling a fuel cell according to any one of claims 11 and 12, **characterized in that**, in the stack part forming step, a thermal expansion absorber for absorbing expansion and contraction in the stacked-direction, caused by temperature change, of a stacked body of the membrane electrode assembly and the separator, is disposed.

14. The method for assembling a fuel cell according to any one of claims 11 to 13, **characterized in that**,
in the stack part forming step,
the stacked body and end plates disposed respectively on both sides of the stacked body are housed in the recess part, the end plates each including a communication passage part to form the communication passage together with the communication passage parts of the membrane electrode assembly and the separator,
the thermal expansion absorber is disposed on an end surface of at least one of the end plates through a second cutout part formed in the sidewall, and
a pressure plate including an open part is disposed on an outer side of the thermal expansion absorber, the open part aligned with the communication passage parts, and,
in the sealing step,
the projection part of the sealer is inserted into the communication passage part of the end plate through the open part of the pressure plate and the first cutout part formed in the sidewall.

15. The method for assembling a fuel cell according to any one of claims 11 to 14, **characterized in that**, in the stack part forming step,
an outer side surface of the stack part housed in the recess part is held by a presser jig of the assembly jig,
the presser jig is made of a material having flexibility, and includes a base part extending along the outer side surface of the stack part housed in the recess part, and an extension part bent from an end portion of the base part and extending along the sidewall, and
the extension part is detachably engaged with the sidewall by using the flexibility.

16. The method for assembling a fuel cell according to any one of claims 10 to 15, **characterized in that**
the fuel cell includes a plurality of the stack parts, and
the method further comprises
an inversely disposing step of disposing the plurality of stack parts so that the plurality of stack parts are alternately inverted from and parallel to each other.

17. The method for assembling a fuel cell according to claim 10, **characterized in that**
the fuel cell includes a stack case and a plurality of the stack parts, and
the method further comprises
a serially disposing step of disposing the stack parts in series in the stack case, the stack parts housed respectively in recess parts of a plurality of assembly jigs.

18. The method for assembling a fuel cell according to claim 17, **characterized in that**
sidewalls of the assembly jigs adjacent to each other respectively include projection parts which are offset to engage with each other, and,
in the serially disposing step, the assembly jigs housing the stack parts are positioned by using the projection parts.

19. The method for assembling a fuel cell according to any one of claims 17 and 18, **characterized in that**, in the serially disposing step, the stack parts housed in the recess parts of the plurality of assembly jigs are pressed, by a press device, in a stacked direction of a stacked body of the membrane electrode assembly and the separator.

20. The method for assembling a fuel cell according to claim 19, **characterized in that**
the sidewall of each of the assembly jigs includes a third cutout part formed to expose an output terminal for outputting electromotive force generated in the corresponding stack part, and
in the serially disposing step, before the pressing by the press device,
a conductor and a grommet having a through-hole are disposed between the assembly jigs adjacent to each other,
the conductor is aligned with the third cutout part, and
the grommet is aligned with the first cutout part.

21. The method for assembling a fuel cell according to claim 20, **characterized in that**
end surfaces of the conductor each have a concave part, and,
at the time of the pressing by the press device in the serially disposing step, the conductor is pressed and flattened while the output terminals of the stack parts are inserted respectively into the concave parts.

22. An apparatus for assembling a fuel cell, wherein
the fuel cell includes a stack part which is formed by stacking a membrane electrode assembly and a separator, the membrane electrode assembly and the separator each including a communication passage part to form a communication passage for allowing fuel gas or oxidant gas to flow, the communication passage, formed by the communication passage parts, being opened at a positive end portion and a negative end portion, the positive end portion and the negative end portion having the same shape, one end of the communication passage being sealable,
the apparatus comprises an assembly jig including a recess part in which the stack part is housed,
the assembly jig includes a sidewall facing an end surface of the stack part, and
the sidewall includes a first cutout part formed to expose the communication passage parts of the stack part.

23. The apparatus for assembling a fuel cell according to claim 22, **characterized in that** the sidewall includes a projection part adjacent to the first cutout part.

24. The apparatus for assembling a fuel cell according to claim 23, **characterized in that**
the fuel cell further includes a thermal expansion absorber absorbing expansion and contraction in the stacked-direction, caused by temperature change, of a stacked body of the membrane electrode assembly and the separator, and
the sidewall includes a second cutout part to dispose the thermal expansion absorber on an end surface of the stack part.

25. The apparatus for assembling a fuel cell according to claim 22, **characterized in that**
the fuel cell includes a pressure plate disposed on an outer side of the thermal expansion absorber, and
a size of the projection part of the sidewall is set so that the projection part of the sidewall and the pressure plate are spaced from each other when the pressure plate is disposed on the outer side of the thermal expansion absorber.

26. The apparatus for assembling a fuel cell according to any one of claims 22 to 25, **characterized by** further comprising a presser jig for holding the stack part housed in the recess part, wherein
the presser jig is made of a material having flexibility, and includes a base part extending along the outer side surface of the stack part housed in the recess part, and an extension part bent from an end portion of the base part and extending along the sidewall, and
the extension part is detachably engaged with the sidewall by using the flexibility.

27. The apparatus for assembling a fuel cell according to claim 26, **characterized by** comprising an elastic member disposed between the sidewall, with which the extension part is engaged, and the end surface of the stack part.

28. The apparatus for assembling a fuel cell according to claim 22, **characterized in that**
the fuel cell includes a stack case and a plurality of the stack parts, and
the apparatus further comprises a plurality of the assembly jigs corresponding to the plurality of stack parts, the assembly jigs disposed in series in the stack case.

29. The apparatus for assembling a fuel cell according to claim 28, **characterized in that** the sidewalls adjacent to each other include projection parts which are offset to engage with each other.

30. The apparatus for assembling a fuel cell according to any one of claim 28 and 29, **characterized by** comprising
a press device for pressing the stack parts housed respectively in recess parts of a plurality of the assembly jigs, in a stacked direction of a stacked body of the membrane electrode assembly and the separator, wherein
the press device is disposed between the assembly jig positioned on one end portion of the plurality of assembly jigs, and the stack case.

31. The apparatus for assembling a fuel cell according to claim 30, **characterized in that**
the sidewalls each include the first cutout part formed to expose the communication passage parts of the corresponding stack part and a third cutout part formed to expose an output terminal for outputting electromotive force generated in the stack part, and,
before the pressing by the press device,
a conductor and a grommet having a through-hole are disposed between the assembly jigs adjacent to each other,
the conductor is aligned with the third cutout part, and
the grommet is aligned with the first cutout part.

32. The apparatus for assembling a fuel cell according to claim 31, **characterized in that**
end surfaces of the conductor each have a concave part, and,
the press device applies pressing force capable of pressing and flattening the conductor, while the output terminals of the stack parts are inserted respectively into the concave parts.
